(19) Europäisches Patentamt / European Patent Office / Office européen des brevets

(11) **EP 4 730 416 A1**

(12) **EUROPEAN PATENT APPLICATION**
published in accordance with Art. 153(4) EPC

(43) Date of publication:
**22.04.2026 Bulletin 2026/17**

(21) Application number: **24851931.6**

(22) Date of filing: **08.08.2024**

(51) International Patent Classification (IPC):
**H01M 4/13** (2010.01)    **H01M 4/62** (2006.01)
**H01M 4/66** (2006.01)    **H01M 10/54** (2006.01)

(52) Cooperative Patent Classification (CPC):
**H01M 4/13; H01M 4/62; H01M 4/66; H01M 10/54;**
Y02E 60/10; Y02W 30/84

(86) International application number:
**PCT/JP2024/028538**

(87) International publication number:
**WO 2025/033514 (13.02.2025 Gazette 2025/07)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:  **08.08.2023  JP 2023129548**

(71) Applicant: **Murata Manufacturing Co., Ltd.
Nagaokakyo-shi, Kyoto 617-8555 (JP)**

(72) Inventor: **HIASA, Takumi
Nagaokakyo-shi, Kyoto 617-8555 (JP)**

(74) Representative: **Witte, Weller & Partner
Patentanwälte mbB
Postfach 10 54 62
70047 Stuttgart (DE)**

(54) **POSITIVE ELECTRODE FOR SECONDARY BATTERY, SECONDARY BATTERY, AND METHOD FOR RECYCLING POSITIVE ELECTRODE FOR SECONDARY BATTERY**

(57)    Provided is a positive electrode for a secondary battery that makes it possible to achieve a superior battery characteristic and a superior recyclability characteristic. The positive electrode for the secondary battery includes a positive electrode active material layer and a positive electrode current collector. The positive electrode active material layer includes a positive electrode active material and a polymer compound. The positive electrode current collector supports the positive electrode active material layer. The positive electrode active material includes a lithium-transition-metal compound. A thermogravimetric loss rate measurable when the polymer compound is fired until a temperature of the polymer compound becomes 400°C in atmospheric air is 60% or higher.

[ FIG. 1 ]

FIG. 1

**Description**

Technical Field

The technology relates to a positive electrode for a secondary battery, to a secondary battery, and to a method of recycling a positive electrode for a secondary battery.

Background Art

Various kinds of electronic equipment, including mobile phones, have been widely used. Such widespread use has promoted development of a secondary battery as a power source that is smaller in size and lighter in weight and allows for a higher energy density. A configuration of the secondary battery has been considered in various ways.

Specifically, in order to obtain a recycled material, a battery is crushed to thereby obtain a crushed material, following which the crushed material is heated at a temperature within a range from 400°C to 550°C both inclusive in atmospheric air to thereby remove an organic substance from the crushed material (for example, see PTL 1). In order to recover an active material, a positive electrode is heated at a temperature within a range from 360°C to 660°C both inclusive in an oxygen-containing gas to thereby separate a foil and the active material from the positive electrode (for example, see PTL 2). In order to recover a negative electrode active material, a negative electrode including an aqueous binder resin such as carboxymethyl cellulose is used, and the negative electrode is heated in an acidic aqueous solution to thereby decompose the aqueous binder resin (for example, see PTL 3).

In addition, a positive electrode of a lithium-ion battery includes a binder such as an acrylic resin or an acetal resin (for example, see PTL 4).

Citation List

Patent Literature

PTL 1: Japanese Unexamined Patent Application Publication No. 2012-195073
PTL 2: Japanese Unexamined Patent Application Publication No. 2020-191184
PTL 3: Japanese Unexamined Patent Application Publication No. 2006-331707
PTL 4: Japanese Unexamined Patent Application Publication No. 2018-206675

Summary of the Invention

Problem to be Solved by the Invention

Although consideration has been given in various ways regarding a configuration of a secondary battery, a battery characteristic of the secondary battery is not sufficient yet. Accordingly, there is room for improvement in terms of the battery characteristic of the secondary battery. In this case, it is important not only to improve the battery characteristic but also to improve a recyclability characteristic of the secondary battery.

It is desirable to provide a positive electrode for a secondary battery, a secondary battery, and a method of recycling a positive electrode for a secondary battery that each make it possible to achieve a superior battery characteristic and a superior recyclability characteristic. Means for Solving the Problem

A positive electrode for a secondary battery according to one embodiment of the technology includes a positive electrode active material layer and a positive electrode current collector. The positive electrode active material layer includes a positive electrode active material and a polymer compound. The positive electrode current collector supports the positive electrode active material layer. The positive electrode active material includes a lithium-transition-metal compound. A thermogravimetric loss rate measurable when the polymer compound is fired until a temperature of the polymer compound becomes 400°C in atmospheric air is 60% or higher.

A secondary battery according to one embodiment of the technology includes a positive electrode for a secondary battery, a negative electrode, and an electrolytic solution. The positive electrode for the secondary battery has a configuration similar to the configuration of the above-described positive electrode for the secondary battery according to one embodiment of the technology.

A method of recycling a positive electrode for a secondary battery according to one embodiment of the technology includes firing the positive electrode for the secondary battery until a temperature of the positive electrode for the secondary battery becomes higher than or equal to 200°C and lower than or equal to 500°C, to thereby allow a polymer compound to burn out and recover a positive electrode current collector and a positive electrode active material. The positive electrode for the secondary battery has a configuration similar to the configuration of the above-described positive electrode for the secondary battery according to one embodiment of the technology.

Here, the term "lithium-transition-metal compound" is a generic term for a compound including lithium and a transition metal element as constituent elements. In addition, the "polymer compound" is a soluble substance that is included together with a positive electrode active material in a positive electrode active material layer, and is separable from an insoluble substance such as the positive electrode active material through a dissolution process using a solvent for dissolution and separation to be described later. Details of the lithium-transition-metal compound and details of the polymer compound will be described later.

Effects of the Invention

According to the positive electrode for the secondary battery or the secondary battery of one embodiment of the technology, the positive electrode for the secondary battery includes the positive electrode active material layer and the positive electrode current collector, the positive electrode active material layer includes the positive electrode active material and the polymer compound, the positive electrode active material includes the lithium-transition-metal compound, and the thermogravimetric loss rate of the polymer compound is 60% or higher. This makes it possible to achieve a superior battery characteristic and a superior recyclability characteristic.

According to the method of recycling the positive electrode for the secondary battery of one embodiment of the technology, the above-described positive electrode for the secondary battery of one embodiment of the technology is fired until the temperature of the positive electrode for the secondary battery falls within the range from 200°C to 500°C both inclusive, to thereby allow the polymer compound to burn out and recover the positive electrode current collector and the positive electrode active material. Accordingly, it is possible for a secondary battery including the positive electrode for the secondary battery to achieve a superior battery characteristic and a superior recyclability characteristic.

Note that effects of the technology are not necessarily limited to those described above and may include any of a series of effects described below in relation to the technology.

Brief Description of Drawings

[FIG. 1] FIG. 1 is a sectional view of a configuration of a positive electrode for a secondary battery according to one embodiment of the technology.
[FIG. 2] FIG. 2 is a sectional view of a configuration of a secondary battery according to a first embodiment of the technology.
[FIG. 3] FIG. 3 is a sectional view of a configuration of a secondary battery according to a second embodiment of the technology.
[FIG. 4] FIG. 4 is a sectional view of a configuration of a secondary battery of Modification example 1.
[FIG. 5] FIG. 5 is a sectional view of a configuration of a secondary battery of Modification example 3.
[FIG. 6] FIG. 6 is a sectional view of a configuration of a secondary battery of Modification example 4.
[FIG. 7] FIG. 7 is a sectional view of a configuration of a secondary battery of Modification example 5.

Modes for Carrying Out the Invention

Some embodiments of the technology are described below in detail with reference to the drawings. The description is given in the following order.

1. Positive Electrode for Secondary Battery

1-1. Configuration
1-2. Operation
1-3. Manufacturing Method
1-4. Action and Effects

2. Secondary Battery (First Embodiment)

2-1. Configuration
2-2. Operation

2-3. Manufacturing Method
2-4. Action and Effects

3. Secondary Battery (Second Embodiment)

3-1. Configuration
3-2. Operation
3-3. Manufacturing Method
3-4. Action and Effects

4. Method of Recycling Positive Electrode for Secondary Battery
5. Modification Examples
6. Applications of Secondary Battery

[1. Positive Electrode for Secondary Battery]

A description is given first of a positive electrode for a secondary battery (hereinafter simply referred to as the "positive electrode") according to an embodiment of the technology.

The positive electrode to be described here is to be used in a secondary battery, which is an electrochemical device. However, the positive electrode may be used in electrochemical devices other than a secondary battery. The electrochemical devices other than a secondary battery are not particularly limited in kind, and specific examples thereof include a capacitor.

Here, the positive electrode is to be used in a secondary battery in which charging and discharging reactions proceed through insertion and extraction of an electrode reactant. The secondary battery includes the positive electrode, a negative electrode, and an aqueous electrolytic solution. The aqueous electrolytic solution is a liquid electrolyte. More specifically, the aqueous electrolytic solution is an electrolytic solution including an aqueous solvent.

Although not particularly limited in kind, the electrode reactant is specifically a light metal such as an alkali metal or an alkaline earth metal. Specific examples of the alkali metal include lithium, sodium, and potassium. Specific examples of the alkaline earth metal include beryllium, magnesium, and calcium.

The following description deals with an example case where the electrode reactant is lithium. A secondary battery in which the charging and discharging reactions proceed through insertion and extraction of a lithium ion is what is called a lithium secondary battery.

[1-1. Configuration]

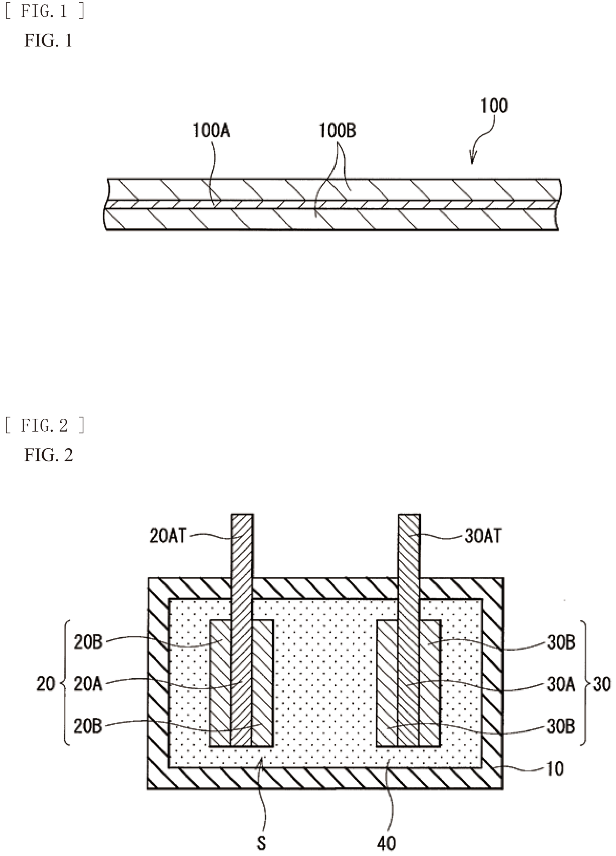

FIG. 1 illustrates a sectional configuration of a positive electrode 100 as an example of the positive electrode according to the embodiment of the technology. The positive electrode 100 includes, as illustrated in FIG. 1, a positive electrode current collector 100A and a positive electrode active material layer 100B.

[Positive Electrode Current Collector]

The positive electrode current collector 100A is an electrically conductive member that supports the positive electrode active material layer 100B. The positive electrode current collector 100A has two opposed surfaces on each of which the positive electrode active material layer 100B is to be provided.

The positive electrode current collector 100A includes any one or more of electrically conductive materials including, without limitation, a metal material, a carbon material, and an electrically conductive ceramic material. Specific examples of the metal material include titanium, zirconium, chromium, aluminum, and alloys thereof. Specific examples of the electrically conductive ceramic material include indium tin oxide (ITO).

In particular, it is preferable that the positive electrode current collector 100A be insoluble or sparingly soluble in and resistant to corrosion by the aqueous electrolytic solution with which the positive electrode 100 is to be impregnated, and have low reactivity to a positive electrode active material to be described later. Therefore, the positive electrode current collector 100A preferably includes the metal material. One reason for this is that this suppresses deterioration of the positive electrode current collector 100A in use of the secondary battery including the positive electrode 100.

In particular, the positive electrode current collector 100A preferably includes any one or more of titanium, zirconium, or chromium as one or more constituent elements. One reason for this is that insertion and extraction efficiency of the lithium ion improves. Another reason is that high heat resistance is obtained, which suppresses a side reaction of the positive electrode current collector 100A upon firing of the positive electrode 100 to be described later.

In this case, the positive electrode current collector 100A may include a simple substance of titanium, a simple substance of zirconium, a simple substance of chromium, or an alloy. The alloy is an alloy including any one or more of titanium, zirconium, or chromium as one or more constituent elements. Note that purity of the simple substance does not necessarily have to be 100%, and the simple substance may thus include any amount of impurity.

Note that the positive electrode current collector 100A may be a member that includes a base body having a surface covered with plating of the simple substance described above, the alloy described above, or both. A material included in the base body is not particularly limited, and may thus be selected as desired.

[Positive Electrode Active Material Layer]

The positive electrode active material layer 100B is a layer which the lithium ion is to be inserted into and extracted from. The positive electrode active material layer 100B is provided on each of the two opposed surfaces of the positive electrode current collector 100A. Note that the positive electrode active material layer 100B may be provided only on one of the two opposed surfaces of the positive electrode current collector 100A.

The positive electrode active material layer 100B includes the positive electrode active material and a polymer compound.

[Positive Electrode Active Material]

The positive electrode active material is a material which the lithium ion is to be inserted into and extracted from, and includes any one or more of lithium-transition-metal compounds.

The term "lithium-transition-metal compound" is a generic term for a compound including lithium and a transition metal element as constituent elements, as described above. Only one transition metal element may be used, or two or more transition metal elements may be used. Specific examples of the transition metal element include nickel, cobalt, manganese, and iron.

Note that the lithium-transition-metal compound may further include any one or more of elements other than lithium and the transition metal element as one or more constituent elements. Specific examples of the one or more elements other than lithium and the transition metal element include one or more of elements belonging to groups 2 to 15 in the long period periodic table.

The lithium-transition-metal compound is not particularly limited in kind, and specific examples thereof include a lithium composite oxide and a lithium phosphoric acid compound. The lithium composite oxide is an oxide that includes lithium and a transition metal element as constituent elements. The lithium phosphoric acid compound is a phosphoric acid compound that includes lithium and a transition metal element as constituent elements.

Specific examples of the lithium composite oxide having a layered rock-salt crystal structure include $LiNiO_2$, $LiCoO_2$, $LiCo_{0.98}Al_{0.01}Mg_{0.01}O_2$, $LiNi_{0.5}Co_{0.2}Mn_{0.3}O_2$, $LiNi_{0.8}Co_{0.15}Al_{0.05}O_2$, $LiNi_{0.33}Co_{0.33}Mn_{0.33}O_2$, $Li_{1.2}Mn_{0.52}Co_{0.175}Ni_{0.1}O_2$, and $Li_{1.15}(Mn_{0.65}Ni_{0.22}Co_{0.13})O_2$.

Specific examples of the lithium composite oxide having a spinel crystal structure include $LiMn_2O_4$.

Specific examples of the lithium phosphoric acid compound having an olivine crystal structure include $LiFePO_4$, $LiMnPO_4$, $LiMn_{0.5}Fe_{0.5}PO_4$, $LiMn_{0.7}Fe_{0.3}PO_4$, and $LiMn_{0.75}Fe_{0.25}PO_4$.

An average particle size (D50) of particles of the positive electrode active material is preferably, for example, greater than or equal to 1 $\mu$m and less than or equal to 50 $\mu$m, and more preferably, for example, greater than or equal to 10 $\mu$m and less than or equal to 25 $\mu$m. One reason for this is that an average particle size over 1 $\mu$m suppresses a change in quality of the positive electrode active material in a firing process, which makes it easier to stably recover the particles of the positive electrode active material, and an average particle size under 50 $\mu$m makes it easier to form a homogeneous film when fabricating the positive electrode. Note that the average particle size (D50) refers to a median diameter corresponding to a cumulative volume of 50% in a volume-based particle size distribution. The average particle size may be measured using, for example, a laser diffraction/scattering particle size distribution measurement apparatus.

[Polymer Compound]

The polymer compound is included together with the positive electrode active material in the positive electrode active material layer 100B, as described above.

Specifically, the polymer compound is dissolvable in a solvent for dissolution and separation to be described later, and is therefore a soluble substance that is separable from an insoluble substance such as the positive electrode active material through a dissolution process using the solvent for dissolution and separation, as described above. The soluble substance is a substance that dissolves in the solvent for solvent separation, and the insoluble substance is a substance that does not dissolve in the solvent for solvent separation.

The polymer compound is not limited to a particular function or role, as long as the above-described conditions related to a configuration and a physical property of the polymer compound are satisfied. For example, the polymer compound may be a positive electrode binder, a positive electrode conductor, an additive, or two or more thereof.

The positive electrode binder is a material that binds particles of a material such as the positive electrode active material to each other. The positive electrode conductor is a material that improves electrical conductivity of the positive electrode active material layer 100B. The additive is a material to be included in the positive electrode active material layer 100B to achieve any purpose. The additive may be a material to be used to improve a physical property of the positive electrode active material layer 100B, or a material to be used to prepare a positive electrode mixture slurry to be described later.

Here, the polymer compound has a predetermined thermal physical property. Specifically, the polymer compound has a property of partly or entirely burning out when fired to a temperature of 400°C in atmospheric air. Thus, a thermogravimetric loss rate measurable when the polymer compound is fired until the temperature of the polymer compound becomes 400°C in the atmospheric air is 60% or higher.

Some reasons why the positive electrode active material layer 100B includes the polymer compound and the thermogravimetric loss rate of the polymer compound is 60% or higher are as described below.

Firstly, when the positive electrode 100 is not fired, a part or all of the polymer compound serves as the positive electrode binder. Thus, the particles of the material such as the positive electrode active material are bound to each other, which provides physical strength of the positive electrode active material layer 100B. Accordingly, in use of the secondary battery including the positive electrode 100, the lithium ion is stably inserted into and extracted from the positive electrode 100.

Secondly, when the positive electrode 100 is fired, a part or all of the polymer compound burns out, which allows the particles of the material such as the positive electrode active material that have been bound to each other to be separated from each other. Thus, the positive electrode current collector 100A and the positive electrode active material are easily and stably recovered from the positive electrode 100 by only using the firing process of the positive electrode 100, without using a complicated process such as a process of crushing the positive electrode 100 or a process of extracting a residual solution of the positive electrode 100. In this case, in particular, recovery efficiency of the positive electrode active material improves.

Thirdly, a part or all of the polymer compound burns out by the positive electrode 100 being fired at a relatively low temperature of 400°C. Thus, the part or all of the polymer compound easily and stably burns out, as compared with a case where the polymer compound does not partly or entirely burn out unless the positive electrode 100 is fired at a high temperature exceeding 400°C. This allows the positive electrode current collector 100A and the positive electrode active material to be more easily and stably recovered from the positive electrode 100, and suppresses a change in quality of each of the positive electrode current collector 100A and the positive electrode active material.

In particular, the thermogravimetric loss rate of the polymer compound is preferably 70% or higher, and more preferably 75% or higher or 80%. The thermogravimetric loss rate of the polymer compound is still more preferably 90%, and particularly preferably 95% or higher.

In measuring the thermogravimetric loss rate of the polymer compound, the polymer compound is analyzed by thermogravimetry. Conditions in analyzing the polymer compound by the thermogravimetry are as described below. Used as a thermogravimetric analyzer is a thermogravimetry/differential thermal analyzer, TG8120, available from Rigaku Corporation. Analysis conditions conform to conditions defined in JIS K7120-1987 (ISO 11358).

Specifically, in the atmospheric air (in dry airflow), the polymer compound is heated at a temperature increase rate of 10°C/min, while a weight of the polymer compound is measured. Thus, the thermogravimetric loss rate of the polymer compound is calculated when the temperature of the polymer compound reaches 400°C. The thermogravimetric loss rate is calculated based on the following calculation expression: thermogravimetric loss rate = [1 - (weight of polymer compound when temperature reaches 400°C/weight of polymer compound at room temperature of 23°C)] $\times$ 100.

A procedure for recovering the polymer compound from the positive electrode 100 in order to measure the thermogravimetric loss rate of the polymer compound is as described below.

First, the positive electrode 100 is put into the solvent for dissolution and separation, following which the solvent for dissolution and separation is stirred. The solvent for dissolution and separation is any one or more of solvents for dissolving the polymer compound included in the positive electrode active material layer 100B of the positive electrode 100 to thereby separate the polymer compound. The solvent for dissolution and separation is not particularly limited in kind, and may thus be an aqueous solvent or a non-aqueous solvent (an organic solvent). Specific examples of the aqueous solvent include pure water. Specific examples of the non-aqueous solvent include an organic solvent such as N-methyl-2-pyrrolidone. The polymer compound is thereby dissolved in the solvent for dissolution and separation. Thus, the polymer compound is separated from the positive electrode 100.

Thereafter, the solvent for dissolution and separation is filtered to thereby take out a filtrate. The filtrate includes dissolved matter of the polymer compound (the soluble substance) without including a solid (the insoluble substance) such as the positive electrode current collector 100A or the positive electrode active material.

Lastly, the filtrate is dried to thereby obtain a dried material. The dried material is the polymer compound separated from the positive electrode 100. In this manner, the polymer compound is recovered from the positive electrode 100.

A specific configuration of the polymer compound is not particularly limited as long as the above-described conditions related to the thermogravimetric loss rate are satisfied.

[Burning-Out Polymer Compound]

Specifically, the polymer compound includes any one or more of burning-out polymer compounds. Note that the polymer compound may substantially not include a non-burning-out polymer compound to be described later, and may thus substantially include only the burning-out polymer compound.

The burning-out polymer compound has a property of burning out by being heated (fired), i.e., a property of burning out owing to thermal decomposition upon firing. In particular, the burning-out polymer compound is preferably a polymer compound that generates only a small amount of residual ash upon the thermal decomposition.

Here, the burning-out polymer compound has a predetermined thermal physical property. Specifically, the burning-out polymer compound has a property of mostly burning out when fired to a temperature of 400°C in the atmospheric air. Thus, a thermogravimetric loss rate measurable when the burning-out polymer compound is fired until the temperature of the burning-out polymer compound becomes 400°C in the atmospheric air is 70% or higher. One reason for this is that the burning-out polymer compound sufficiently burns out upon firing, which makes it easier to recover the positive electrode current collector 100A and the positive electrode active material from the positive electrode 100.

The thermogravimetric loss rate of the burning-out polymer compound is preferably 75% or higher, more preferably 80% or higher, still more preferably 90% or higher, and particularly preferably 100%. One reason for this is that this makes it even easier to recover the positive electrode current collector 100A and the positive electrode active material from the positive electrode 100.

In particular, when the polymer compound includes the burning-out polymer compound, the thermogravimetric loss rate measurable when the polymer compound is fired until the temperature of the polymer compound becomes 400°C in the atmospheric air is preferably 75% or higher, more preferably 80% or higher, still more preferably 95% or higher, and particularly preferably 98% or higher. One reason for this is that this further improves the series of advantages described above. A specific example of the case where the polymer compound includes the burning-out polymer compound described here is a case where the polymer compound includes only the burning-out polymer compound without including the non-burning-out polymer compound to be described later.

A procedure for measuring the thermogravimetric loss rate of the burning-out polymer compound is similar to the procedure for measuring the thermogravimetric loss rate of the polymer compound. In addition, a procedure for recovering the burning-out polymer compound from the positive electrode 100 is similar to the procedure for recovering the polymer compound from the positive electrode 100.

The burning-out polymer compound is not particularly limited in kind as long as the burning-out polymer compound has the thermal physical property described above.

Specific examples of the burning-out polymer compound include a polyacrylic acid ester, a polymethacrylic acid ester, polyvinyl alcohol, a polyvinyl ether, a polyvinyl ester, a cellulose ester, and a cellulose ether.

In addition, the burning-out polymer compound is preferably an aliphatic polymer compound including no aromatic ring, and more preferably a polymer compound with no sugar chain including cellulose.

Specific examples of the polyacrylic acid ester include methyl polyacrylate and ethyl polyacrylate. Specific examples of the polymethacrylic acid ester include polymethyl methacrylate and polyethyl methacrylate. Specific examples of the polyvinyl ether include polyvinyl acetal and polyvinyl butyral. Specific examples of the polyvinyl ester include polyvinyl acetate and polyvinyl butyrate. Specific examples of the cellulose ester include acetyl cellulose, diacetyl cellulose, and triacetyl cellulose. Specific examples of the cellulose ether include methyl cellulose, ethyl cellulose, carboxymethyl cellulose, and carboxyethyl cellulose.

In addition, the burning-out polymer compound may be a copolymer including one or more constitutional units of one or more polymer compounds selected from, for example, a polyacrylic acid ester, a polymethacrylic acid ester, polyvinyl alcohol, a polyvinyl ether, a polyvinyl ester, a cellulose ester, and a cellulose ether.

[Non-Burning-Out Polymer Compound]

The polymer compound may further include any one or more of non-burning-out polymer compounds. In other words, the polymer compound may include the non-burning-out polymer compound together with the burning-out polymer compound. One reason for this is that a part or all of the non-burning-out polymer compound serves as the positive electrode binder, which further improves a binding property between the particles of the material such as the positive electrode active material.

The non-burning-out polymer compound has a thermal physical property different from the thermal physical property of the burning-out polymer compound. Specifically, the non-burning-out polymer compound has a property of hardly burning out even if fired to a temperature of 400°C in the atmospheric air. Thus, a thermogravimetric loss rate measurable when the non-burning-out polymer compound is fired until the temperature of the non-burning-out polymer compound becomes 400°C in the atmospheric air is lower than 70%.

A procedure for measuring the thermogravimetric loss rate of the non-burning-out polymer compound is similar to the procedure for measuring the thermogravimetric loss rate of the burning-out polymer compound. In addition, a procedure for recovering the non-burning-out polymer compound from the positive electrode 100 is similar to the procedure for recovering the polymer compound from the positive electrode 100.

Note that two or more kinds of solvents for dissolution and separation may be used in order to recover the polymer compound including the burning-out polymer compound and the non-burning-out polymer compound from the positive electrode 100. Details of a procedure using the two or more kinds of solvents for dissolution and separation will be described later.

The non-burning-out polymer compound is not particularly limited in kind as long as the non-burning-out polymer compound has the thermal physical property described above.

Specific examples of the non-burning-out polymer compound include a fluorine-containing resin such as polyvinylidene difluoride or polytetrafluoroethylene. Other specific examples of the non-burning-out polymer compound include a non-fluorine-containing resin such as polyether ether ketone, polyphenylene sulfide, or polyimide. The fluorine-containing resin is a polymer compound including fluorine as a constituent element, and the non-fluorine-containing resin is a polymer compound including no fluorine as a constituent element.

Note that, when the polymer compound includes the non-burning-out polymer compound together with the burning-out polymer compound, a predetermined relationship related to the weight of the polymer compound is preferably established in order to make it possible to efficiently recover the positive electrode current collector 100A and the positive electrode active material from the positive electrode 100 through the firing process.

[Weight Ratio WR]

Specifically, a weight ratio WR represented by Expression (1) is preferably 86% or greater. Note that the weight ratio WR is a value rounded off to the nearest whole number.

$$\mathrm{WR} = [\mathrm{W1}/(\mathrm{W1} + \mathrm{W2})] \times 100 \quad \text{......} \ (1)$$

where:

WR is the weight ratio;
W1 is a weight of the burning-out polymer compound; and
W2 is a weight of the non-burning-out polymer compound.

The weight ratio WR is an index indicating how much the burning-out polymer compound that is to burn out through the firing process is included in the positive electrode binder. More specifically, the weight ratio WR is an index indicating a ratio of the weight of the burning-out polymer compound, with respect to a sum of the weight of the burning-out polymer compound and the weight of the non-burning-out polymer compound. A larger value of the weight ratio WR indicates a larger ratio of the burning-out polymer compound in the polymer compound, and a smaller value of the weight ratio WR indicates a smaller ratio of the burning-out polymer compound in the polymer compound.

One reason why the weight ratio WR is 86% or greater is that, even if the polymer compound includes the burning-out polymer compound and the non-burning-out polymer compound, the polymer compound easily burns out through the firing process because most of the polymer compound is the burning-out polymer compound. In this case, most of the polymer compound is easily removed by allowing the burning-out polymer compound to burn out through the firing process of the positive electrode 100. Thus, it becomes easier to separate the positive electrode current collector 100A and the positive electrode active material from the positive electrode 100, which makes it easier to recover the positive electrode current collector 100A and the positive electrode active material.

In this case, in particular, a larger weight ratio WR makes it easier to recover the positive electrode current collector 20A and the positive electrode active material, which improves recovery efficiency of the positive electrode current collector 20A and the positive electrode active material. Specifically, the weight ratio WR is preferably 90% or greater, more preferably 95% or greater, and still more preferably 98%.

Note that, when the weight ratio WR is less than 86%, it is difficult for the polymer compound to burn out through the firing process because not most of the polymer compound is the burning-out polymer compound. In this case, even if a component that is to burn out through the firing process of the positive electrode 100, i.e., the burning-out polymer compound, is allowed to burn out, a component that does not burn out in the firing process, i.e., the non-burning-out polymer compound, remains. Thus, it becomes difficult to separate the positive electrode current collector 100A and the positive electrode active material from the positive electrode 100, which makes it difficult to recover the positive electrode current collector 100A and the positive electrode active material. In this case, in particular, the recovery efficiency of the positive electrode active material decreases.

It has been described here that, when the polymer compound includes the burning-out polymer compound and the non-burning-out polymer compound, the weight ratio WR is preferably 86% or greater. On the other hand, the weight ratio WR calculated when the polymer compound includes only the burning-out polymer compound without including the non-burning-out polymer compound is 100%. Accordingly, the condition that the weight ratio WR is 86% or greater is naturally satisfied also when the polymer compound includes only the burning-out polymer compound.

[Procedure for Calculating Weight Ratio WR]

A procedure for calculating the weight ratio WR is as described below.

First, the positive electrode 100 is put into the solvent for dissolution and separation, following which the solvent for dissolution and separation is stirred. The solvent for dissolution and separation is a solvent for dissolving the polymer compound (the burning-out polymer compound and the non-burning-out polymer compound) included in the positive electrode active material layer 100B of the positive electrode 100 to thereby separate the polymer compound. The solvent for dissolution and separation is not particularly limited in kind, and may thus be an aqueous solvent or a non-aqueous solvent. Details of the solvent for dissolution and separation are as described above. The polymer compound is thereby dissolved in the solvent for dissolution and separation. Thus, the polymer compound is separated from the positive electrode 100.

In this case, two kinds of solvents for solvent separation may be used in combination depending on a solubility of the polymer compound. Specifically, any one or more of solvents for dissolution and separation of a first kind are used in order to separate the burning-out polymer compound. In addition, any one or more of solvents for dissolution and separation of a second kind different from the above-described solvent for dissolution and separation of the first kind are used in order to separate the non-burning-out polymer compound. The solvent for dissolution and separation of the first kind and the solvent for dissolution and separation of the second kind may both be aqueous solvents or may both be non-aqueous solvents. Needless to say, one of the solvent for dissolution and separation of the first kind or the solvent for dissolution and separation of the second kind may be an aqueous solvent, and the other may be a non-aqueous solvent.

Thereafter, the solvent for dissolution and separation is filtered to thereby take out a filtrate. Because the filtrate includes the polymer compound (the burning-out polymer compound and the non-burning-out polymer compound), the polymer compound is separated from the positive electrode 100.

Thereafter, the filtrate is dried to thereby obtain a dried material of the polymer compound that is a mixture of the burning-out polymer compound and the non-burning-out polymer compound, following which the polymer compound is separated by a separation method such as a centrifugal separation method. Thus, the burning-out polymer compound and the non-burning-out polymer compound are separated from each other, which allows each of the burning-out polymer compound and the non-burning-out polymer compound to be recovered from the positive electrode 100.

Lastly, the weight W1 of the burning-out polymer compound is measured and the weight W2 of the non-burning-out polymer compound is measured, following which the weight ratio WR is calculated based on the weights W1 and W2.

[Weight Ratio WRZ]

The weight ratio WR described above is a parameter focusing on the burning-out polymer compound. Meanwhile, a weight ratio WRZ as a parameter focusing on the non-burning-out polymer compound preferably satisfies a predetermined condition.

Specifically, the weight ratio WRZ represented by Expression (2) is preferably greater than or equal to 0% and less than 14% ($0\% \leq WRZ < 14\%$), and more preferably greater than 0% and less than 14% ($0\% < WRZ < 14\%$). Note that the weight ratio WRZ is a value rounded off to the nearest whole number.

$$WRZ = [W2/(W1 + W2)] \times 100 \quad \ldots\ldots (2)$$

where:

WRZ is the weight ratio;
W1 is the weight of the burning-out polymer compound; and
W2 is the weight of the non-burning-out polymer compound.

One reason why the weight ratio WRZ is greater than or equal to 0% and less than 14% is that, as described above, even if the polymer compound includes the burning-out polymer compound and the non-burning-out polymer compound, the polymer compound easily burns out through the firing process because most of the polymer compound is the burning-out polymer compound. Accordingly, it becomes easier to separate the positive electrode current collector 100A and the positive electrode active material from the positive electrode 100 for the reason described above, which makes it easier to recover the positive electrode current collector 100A and the positive electrode active material.

In this case, in particular, a smaller weight ratio WRZ makes it easier to recover the positive electrode current collector 100A and the positive electrode active material, which improves the recovery efficiency of the positive electrode current collector 100A and the positive electrode active material.

Note that a procedure for calculating the weight ratio WRZ is similar to the above-described procedure for calculating the weight ratio WR, except that the weight ratio WRZ is calculated instead of the weight ratio WR.

[Positive Electrode Conductor]

The positive electrode active material layer 100B may further include a positive electrode conductor. The positive electrode conductor includes any one or more of electrically conductive materials including, without limitation, a carbon material, a metal material, an electrically conductive ceramic material, and an electrically conductive polymer compound. Specific examples of the carbon material include graphite, carbon black, acetylene black, and Ketjen black. The graphite may be natural graphite or artificial graphite. Specific examples of the metal material include titanium, copper, silver, tin, bismuth, lead, and alloys thereof.

When the positive electrode conductor includes the electrically conductive polymer compound, the electrically conductive polymer compound serves as a part of the polymer compound described above. The electrically conductive polymer compound may be the burning-out polymer compound or the non-burning-out polymer compound.

In particular, the positive electrode conductor preferably includes the carbon material. One reason for this is that the carbon material has high dispersibility in the positive electrode active material layer 100B, and sufficiently improves the electrical conductivity of the positive electrode active material layer 100B.

[1-2. Operation]

In the positive electrode 100, the lithium ion is extracted from the positive electrode active material layer 100B, and is inserted into the positive electrode active material layer 100B.

[1-3. Manufacturing Method]

The positive electrode 100 is manufactured by an example procedure described below. In the following, a description will be given of a case where the polymer compound includes the burning-out polymer compound and the non-burning-out polymer compound, and the positive electrode active material layer 100B includes the positive electrode binder (the carbon material).

First, the positive electrode active material including the lithium-transition-metal compound, the positive electrode binder including the polymer compound (the burning-out polymer compound and the non-burning-out polymer compound), and the positive electrode conductor including the carbon material are mixed with each other to thereby obtain a positive electrode mixture.

Thereafter, the positive electrode mixture is put into a solvent to thereby prepare a positive electrode mixture slurry in paste form. The solvent may be an aqueous solvent, or may be a non-aqueous solvent.

Lastly, the positive electrode mixture slurry is applied on the two opposed surfaces of the positive electrode current collector 100A to thereby form the positive electrode active material layers 100B. Thereafter, the positive electrode active material layers 100B may be compression-molded by a compression apparatus such as a roll pressing machine. In this case, the positive electrode active material layers 100B may be heated. The positive electrode active material layers 100B may be compression-molded multiple times.

The positive electrode active material layers 100B are thus formed on the two opposed surfaces of the positive electrode current collector 100A. As a result, the positive electrode 100 is completed.

[1-4. Action and Effects]

According to the positive electrode 100, the positive electrode 100 includes the positive electrode current collector 100A and the positive electrode active material layer 100B, the positive electrode active material layer 100B includes the positive electrode active material and the polymer compound, the positive electrode active material includes the lithium-transition-metal compound, and the thermogravimetric loss rate of the polymer compound is 60% or higher.

In this case, a series of kinds of action described below is achieved, as described above.

Firstly, when the positive electrode 100 is not subjected to the firing process, the particles of the material such as the positive electrode active material are bound to each other using a part or all of the polymer compound, which provides the physical strength of the positive electrode active material layer 100B. The lithium ion is thus stably inserted into and extracted from the positive electrode 100 in use of the secondary battery including the positive electrode 100.

Secondly, when the positive electrode 100 is subjected to the firing process, a part or all of the polymer compound burns out, which allows the particles of the material such as the positive electrode active material that have been bound to each other to be separated from each other. Thus, the positive electrode current collector 100A and the positive electrode active material are easily and stably recovered from the positive electrode 100 by only using the firing process of the positive electrode 100.

Thirdly, because a part or all of the polymer compound burns out by the positive electrode 100 being fired at a relatively low temperature of 400°C, the part or all of the polymer compound easily and stably burns out. This allows the positive electrode current collector 100A and the positive electrode active material to be more easily and stably recovered from the positive electrode 100, and suppresses the change in quality of each of the positive electrode current collector 100A and the positive electrode active material.

Based upon the above, the positive electrode current collector 100A and the positive electrode active material are easily and stably recovered from the positive electrode 100, while insertion and extraction of the lithium ion into and from the positive electrode active material layer 100B is achieved. Accordingly, it is possible for the secondary battery including the positive electrode 100 to achieve a superior battery characteristic and a superior recyclability characteristic.

In particular, the polymer compound may include the burning-out polymer compound, and the thermogravimetric loss rate of the burning-out polymer compound may be 70% or higher, which allows the burning-out polymer compound to sufficiently burn out upon firing. This makes it easier to recover the positive electrode current collector 100A and the positive electrode active material from the positive electrode 100. Accordingly, it is possible to achieve higher effects.

In this case, the thermogravimetric loss rate of the polymer compound may be 95% or higher. This makes it even easier to recover the positive electrode current collector 100A and the positive electrode active material from the positive electrode 100. Accordingly, it is possible to achieve even higher effects.

Further, the burning-out polymer compound may include any one or more of a polyacrylic acid ester, a polymethacrylic acid ester, polyvinyl alcohol, polyvinyl acetal, polyvinyl butyral, polyvinyl acetate, a cellulose ester, or a cellulose ether, which allows the positive electrode binder to easily and stably burn out in the firing process of the positive electrode 100. Thus, the positive electrode current collector 100A and the positive electrode active material are recovered more easily and stably from the positive electrode 100. Accordingly, it is possible to achieve higher effects.

Further, the polymer compound may include the non-burning-out polymer compound together with the burning-out polymer compound, the thermogravimetric loss rate of the non-burning-out polymer compound may be lower than 70%, and the weight ratio WR may be 86% or greater. This makes it easier to separate the positive electrode current collector 100A and the positive electrode active material from the positive electrode 100 through the firing process of the positive electrode 100. Thus, it becomes easier to recover the positive electrode current collector 100A and the positive electrode active material even if the polymer compound includes the burning-out polymer compound and the non-burning-out polymer compound. Accordingly, it is possible to achieve higher effects.

Alternatively, the polymer compound may include the non-burning-out polymer compound together with the burning-out polymer compound, the thermogravimetric loss rate of the non-burning-out polymer compound may be lower than 70%, and the weight ratio WRZ may be greater than or equal to 0% and less than 14%. This makes it easier to separate the positive electrode current collector 100A and the positive electrode active material from the positive electrode 100 through the firing process of the positive electrode 100. Thus, it becomes easier to recover the positive electrode current collector 100A and the positive electrode active material even if the polymer compound includes the burning-out polymer compound and the non-burning-out polymer compound. Accordingly, it is possible to achieve higher effects.

In these cases, the non-burning-out polymer compound may include any one or more of polyvinylidene difluoride, polytetrafluoroethylene, polyether ether ketone, polyphenylene sulfide, or polyimide. This improves the binding property between the particles of the material such as the positive electrode active material. Accordingly, it is possible to achieve even higher effects.

Further, the positive electrode current collector 100A may include any one or more of titanium, zirconium, or chromium as one or more constituent elements. This improves the insertion and extraction efficiency of the lithium ion, and suppresses the side reaction of the positive electrode current collector 100A in the firing process of the positive electrode 100. Accordingly, it is possible to achieve higher effects.

Further, the positive electrode active material layer 100B may further include the positive electrode conductor, and the positive electrode conductor may include the carbon material. This improves the electrical conductivity of the positive electrode active material layer 100B while allowing the positive electrode current collector 100A and the positive electrode active material to be easily and stably recovered from the positive electrode 100. Thus, the battery characteristic further improves while the recyclability characteristic is achieved. Accordingly, it is possible to achieve higher effects.

[2. Secondary Battery (First Embodiment)]

Next, a description is given of a secondary battery according to a first embodiment of the technology to which the positive electrode 100 described above is applied.

The secondary battery to be described here is a secondary battery in which the charging and discharging reactions proceed through insertion and extraction of an electrode reactant. The secondary battery includes a positive electrode, a negative electrode, and an aqueous electrolytic solution. Details of the electrode reactant are as described above.

The following description deals with a case where the electrode reactant is lithium and the secondary battery is thus a lithium secondary battery, or a lithium-ion secondary battery, as described above.

[2-1. Configuration]

FIG. 2 illustrates a sectional configuration of the secondary battery according to the first embodiment.

As illustrated in FIG. 2, the secondary battery includes an outer package body 10, a positive electrode 20, a negative electrode 30, and an electrolytic solution 40. In FIG. 1, the electrolytic solution 40 is lightly shaded.

[Outer Package Body]

As illustrated in FIG. 2, the outer package body 10 is a substantially box-shaped outer package member for containing the positive electrode 20, the negative electrode 30, and the electrolytic solution 40, and has an internal space S.

The outer package body 10 includes any one or more of materials including, without limitation, a metal material, a glass material, and a polymer compound. Note that the outer package body 10 may be, but not limited to, a rigid metal can, a rigid glass case, a rigid plastic case, a soft or flexible metal foil, or a soft or flexible polymer film.

[Positive Electrode]

As illustrated in FIG. 2, the positive electrode 20 is disposed in the internal space S, and allows the lithium ion to be inserted thereinto and extracted therefrom. The positive electrode 20 has a configuration similar to that of the positive electrode 100, and thus includes a positive electrode current collector 20A and a positive electrode active material layer 20B.

The positive electrode current collector 20A has a configuration similar to that of the positive electrode current collector 100A except what is described below. The positive electrode active material layer 20B has a configuration similar to that of the positive electrode active material layer 100B except what is described below.

The positive electrode current collector 20A includes a coupling terminal part 20AT that is not provided with the positive electrode active material layer 20B, and the coupling terminal part 20AT is led to an outside of the outer package body 10. The positive electrode active material layer 20B may be provided only on one of two opposed surfaces of the positive electrode current collector 20A on a side where the positive electrode 20 is opposed to the negative electrode 30.

[Negative Electrode]

As illustrated in FIG. 2, the negative electrode 30 is disposed in the internal space S, and allows the lithium ion to be inserted thereinto and extracted therefrom. The negative electrode 30 includes a negative electrode current collector 30A and a negative electrode active material layer 30B. Note, however, that the negative electrode current collector 30A may be omitted.

[Negative Electrode Current Collector]

The negative electrode current collector 30A is an electrically conductive member that supports the negative electrode active material layer 30B. The negative electrode current collector 30A has two opposed surfaces that each support the negative electrode active material layer 30B. The negative electrode current collector 30A includes any one or more of electrically conductive materials including, without limitation, a metal material, a carbon material, and an electrically conductive ceramic material.

Specific examples of the metal material include stainless steel (SUS), titanium, zinc, tin, lead, and an alloy of each of these materials. The stainless steel may be highly corrosionresistant stainless steel that includes any one or more of additive elements including, without limitation, niobium and molybdenum added thereto. Specifically, the stainless steel may be, for example, SUS444 including molybdenum added thereto as an additive element. Details of the electrically conductive ceramic material are as described above.

It is preferable that the negative electrode current collector 30A be insoluble or sparingly soluble in and resistant to corrosion by the electrolytic solution 40, and have low reactivity to a negative electrode active material to be described later. Therefore, the negative electrode current collector 30A preferably includes the metal material. One reason for this is that this suppresses deterioration of the negative electrode current collector 30A upon charging and discharging.

Note that the negative electrode current collector 30A may be a base body having a surface covered with plating of any of the above-described electrically conductive materials. A material included in the base body is not particularly limited, and may thus be selected as desired.

Here, the negative electrode current collector 30A includes a coupling terminal part 30AT that is not provided with the negative electrode active material layer 30B, and the coupling terminal part 30AT is led to the outside of the outer package body 10.

[Negative Electrode Active Material Layer]

The negative electrode active material layer 30B is a layer which the lithium ion is to be inserted into and extracted from. Here, the negative electrode active material layer 30B is provided on each of the two opposed surfaces of the negative electrode current collector 30A. However, the negative electrode active material layer 30B may be provided only on one of the two opposed surfaces of the negative electrode current collector 30A on a side where the negative electrode 30 is opposed to the positive electrode 20.

The negative electrode active material layer 30B includes the negative electrode active material. Note that the negative electrode active material layer 30B may further include any one or more of materials including, without limitation, a negative electrode binder and a negative electrode conductor.

The negative electrode active material is a material which the lithium ion is to be inserted into and extracted from, and includes any one or more of materials including, without limitation, titanium oxide, a carbon material, and a metal-based material. Specific examples of titanium oxide include anatase-type titanium dioxide, rutile-type titanium dioxide, and brookitetype titanium dioxide. Specific examples of the carbon material include graphite. The graphite may be natural graphite or artificial graphite. The metal-based material is a material including, as one or more constituent elements, any one or more of metal elements and metalloid elements that are each able to form an alloy with lithium.

[Electrolytic Solution]

The electrolytic solution 40 is contained in the internal space S, and is an aqueous electrolytic solution as described above. In other words, the electrolytic solution 40 is a solution in which an ionizable ionic material is dissolved or dispersed in an aqueous solvent.

The secondary battery according to the first embodiment is a secondary battery of what is called a one-component type, because the secondary battery includes one aqueous electrolytic solution (i.e., the electrolytic solution 40).

The electrolytic solution 40 includes the aqueous solvent and any one or more of ionic materials that are ionizable in the aqueous solvent. More specifically, the electrolytic solution 40 included in the lithium-ion secondary battery includes the lithium ion that is to be inserted into and extracted from each of the positive electrode 20 and the negative electrode 30.

The aqueous solvent is not particularly limited in kind, and specific examples thereof include pure water. The ionic material is not particularly limited in kind, and specifically includes any one or more of materials including, without limitation, an acid, a base, and an electrolyte salt. Specific examples of the acid include carbonic acid, oxalic acid, nitric acid, sulfuric acid, hydrochloric acid, acetic acid, and citric acid.

The electrolyte salt is a salt including a cation and an anion. Here, because the cation is the lithium ion as described above, the electrolyte salt includes any one or more of lithium salts. The anion is not particularly limited in kind.

Specific examples of the lithium salt include lithium carbonate, lithium oxalate, lithium nitrate, lithium sulfate, lithium chloride, lithium acetate, lithium citrate, lithium hydroxide, and an imide salt. Examples of the imide salt include lithium bis(fluorosulfonyl)imide and lithium bis(trifluoromethane sulfonyl)imide.

Here, the anion is not particularly limited in kind as described above. Therefore, the anion may include any one or more of fluorine-containing anions, or may include any one or more of non-fluorine-containing anions. The term "fluorine-containing anion" is a generic term for an anion including fluorine as a constituent element. Specific examples of the fluorine-containing anion include a bis(fluorosulfonyl)imide ion and a bis(trifluoromethane sulfonyl)imide ion. The term "non-fluorine-containing anion" is a generic term for an anion including no fluorine as a constituent element. Specific examples of the non-fluorine-containing anion are not particularly limited.

In particular, the anion preferably includes the non-fluorine-containing anion rather than the fluorine-containing anion. One reason for this is that this suppresses generation of hydrogen fluoride (HF) upon charging and discharging, and thus suppresses corrosion of components of the secondary battery. The components of the secondary battery include, for example, the outer package body 10, the positive electrode current collector 20A, and the negative electrode current collector 30A.

When the anion includes the fluorine-containing anion, a content of the fluorine-containing anion included in the anion is preferably not too large. Specifically, the content of the fluorine-containing anion in the electrolytic solution is preferably 50 mmol/kg or less. One reason for this is that this sufficiently suppresses the corrosion of the components of the secondary battery. Note that hydrogen fluoride, which is a cause of the corrosion of the components of the secondary battery, is a substance that is generated by decomposition and a reaction of the electrolyte salt upon charging and discharging, and is similarly generated in the firing process of the positive electrode 100 to be described later.

A content of the ionic material, i.e., a concentration (mol/kg) of the electrolytic solution 40, is not particularly limited, and may thus be set as desired. Specifically, the concentration of the electrolytic solution 40 is preferably within a range from 0.2 mol/kg to 4 mol/kg both inclusive.

Note that the electrolyte salt may further include any one or more of other metal salts in addition to the above-described lithium salt. The other metal salt is not particularly limited in kind, and specific examples thereof include an alkali metal salt (excluding the lithium salt), an alkaline earth metal salt, and a transition metal salt. Specific examples of the alkali metal salt include a sodium salt and a potassium salt. Specific examples of the alkaline earth metal salt include a calcium salt and a magnesium salt.

It is more preferable that the electrolytic solution 40 be a saturated solution of the electrolyte salt. One reason for this is that this facilitates stable insertion and extraction of the lithium ion upon charging and discharging, which makes it easier for the charging and discharging reactions to proceed stably.

In order to check whether the electrolytic solution 40 is the saturated solution of the electrolyte salt, the secondary battery may be disassembled, following which the internal space S may be visually observed to thereby check whether the electrolyte salt is deposited. In observing the internal space S, observed are specifically, for example, a location in the electrolytic solution 40, a location on a surface of the positive electrode 20, and a location on an inner wall surface of the outer package body 10. If the electrolyte salt is deposited and the electrolytic solution 40, which is a liquid, and the deposited matter of the electrolyte salt, which is a solid, therefore coexist, it is conceivable that the electrolytic solution 40 is a saturated solution of the electrolyte salt. In order to examine a composition of the deposited matter, a surface analysis method such as X-ray photoelectron spectroscopy (XPS) may be used, or a composition analysis method such as inductively coupled plasma (ICP) optical emission spectroscopy may be used.

[2-2. Operation]

The secondary battery operates as described below.

Upon charging, when the lithium ion is extracted from the positive electrode 20, the extracted lithium ion moves through the electrolytic solution 40 to the negative electrode 30. Thus, the lithium ion is inserted into the negative electrode 30. Upon discharging, when the lithium ion is extracted from the negative electrode 30, the extracted lithium ion moves through the electrolytic solution 40 to the positive electrode 20. Thus, the lithium ion is inserted into the positive electrode 20.

[2-3. Manufacturing Method]

To fabricate the secondary battery, the positive electrode 20 and the negative electrode 30 are each fabricated and the electrolytic solution 40 is prepared, following which the secondary battery is assembled, in accordance with an example procedure described below.

[Fabrication of Positive Electrode]

The positive electrode active material layers 20B are formed on the respective two opposed surfaces of the positive electrode current collector 20A by a procedure similar to the procedure for fabricating the positive electrode 100 described above. Note that, to form the positive electrode active material layers 20B, the positive electrode mixture slurry is applied on the two opposed surfaces of the positive electrode current collector 20A excluding the coupling terminal part 20AT. Thus, the positive electrode 20 is fabricated.

[Fabrication of Negative Electrode]

First, the negative electrode active material, the negative electrode binder, and the negative electrode conductor are mixed with each other to thereby obtain a negative electrode mixture. Thereafter, the negative electrode mixture is put into a solvent to thereby prepare a negative electrode mixture slurry in paste form. The solvent may be an aqueous solvent, or may be an organic solvent. Lastly, the negative electrode mixture slurry is applied on the two opposed surfaces of the negative electrode current collector 30A excluding the coupling terminal part 30AT to thereby form the negative electrode active material layers 30B. Thereafter, the negative electrode active material layers 30B may be compression-molded by a compression apparatus such as a roll pressing machine. In this case, the negative electrode active material layers 30B may be heated. The negative electrode active material layers 30B may be compression-molded multiple times. In this manner, the negative electrode 30 is fabricated.

[Preparation of Electrolytic Solution]

The ionic material is added to the aqueous solvent. The ionic material is thereby dispersed or dissolved in the aqueous solvent. As a result, the electrolytic solution 40 is prepared. In this case, adjusting conditions including, without limitation, a kind and a concentration (mol/kg) of the ionic material makes it possible to adjust a pH of the electrolytic solution 40.

[Assembly of Secondary Battery]

First, the positive electrode 20 and the negative electrode 30 are placed in the internal space S of the outer package body 10. In this case, the coupling terminal parts 20AT and 30AT are each led to the outside of the outer package body 10.

Thereafter, the electrolytic solution 40 is supplied into the internal space S through an unillustrated injection hole provided in the outer package body 10. Thereafter, the injection hole is sealed.

Thus, the electrolytic solution 40 is contained in the internal space S in which the positive electrode 20 and the negative electrode 30 are each disposed. As a result, the secondary battery of the one-component type including one aqueous electrolytic solution (i.e., the electrolytic solution 40) is completed.

[2-4. Action and Effects]

According to the secondary battery of the first embodiment, the positive electrode 20 has the configuration similar to that of the positive electrode 100. Thus, for the reasons described above, the positive electrode current collector 20A and the positive electrode active material are easily and stably recovered from the positive electrode 20, while insertion and extraction of the lithium ion into and from the positive electrode active material layer 20B is achieved. This makes it possible to achieve a superior battery characteristic and a superior recyclability characteristic.

In particular, the electrolytic solution may include the non-fluorine-containing anion, which suppresses the corrosion of the components of the secondary battery. This allows for stable operations of the secondary battery, and suppresses the change in quality of the positive electrode current collector 20A. Accordingly, it is possible to achieve higher effects.

Further, the secondary battery may include a lithium secondary battery. This makes it possible to obtain a sufficient battery capacity stably through insertion and extraction of the lithium ion. Accordingly, it is possible to achieve higher effects.

Other action and effects of the secondary battery according to the first embodiment are similar to those of the positive electrode 100.

[3. Secondary Battery (Second Embodiment)]

Next, a description is given of a secondary battery according to a second embodiment of the technology to which the positive electrode 100 described above is applied.

The secondary battery according to the second embodiment is a secondary battery of a two-component type including two aqueous electrolytic solutions (i.e., a positive electrode electrolytic solution 61 and a negative electrode electrolytic solution 62), unlike the secondary battery according to the first embodiment, which is the secondary battery of the one-component type including one aqueous electrolytic solution (i.e., the electrolytic solution 40).

[3-1. Configuration]

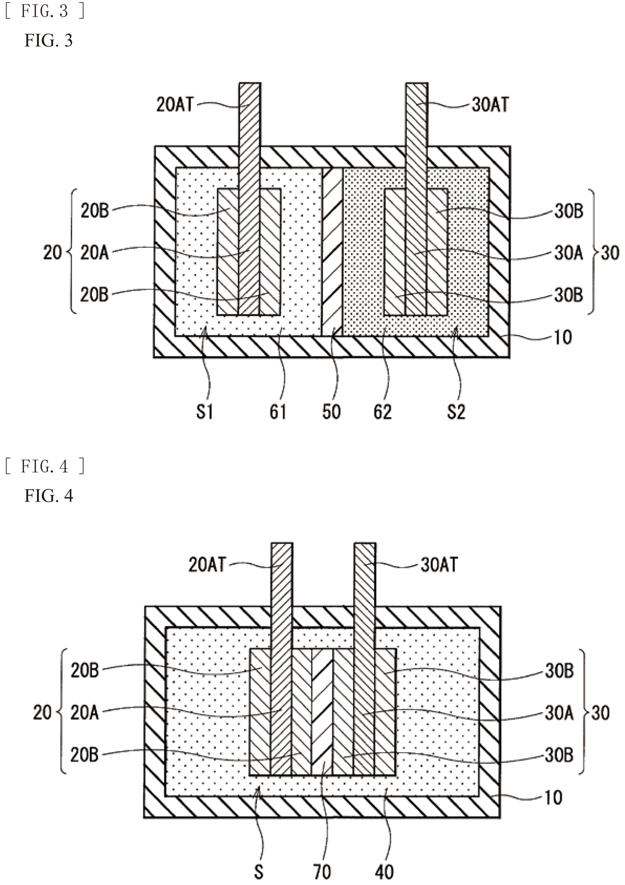

FIG. 3 illustrates a sectional configuration of the secondary battery according to the second embodiment, and corresponds to FIG. 2. The secondary battery according to the second embodiment to be described here has a configuration similar to the configuration (FIG. 2) of the secondary battery according to the first embodiment except for those described below.

As illustrated in FIG. 3, the secondary battery further includes a partition 50, and includes the positive electrode electrolytic solution 61 and the negative electrode electrolytic solution 62 instead of the electrolytic solution 40. In FIG. 3, the positive electrode electrolytic solution 61 is lightly shaded, and the negative electrode electrolytic solution 62 is darkly shaded.

The outer package body 10 has two spaces therein that are separated from each other by the partition 50. The two spaces are a positive electrode compartment S1 and a negative electrode compartment S2.

The partition 50 is disposed between the positive electrode 20 and the negative electrode 30, and divides the internal space S (see FIG. 2) into the positive electrode compartment S1 and the negative electrode compartment S2. Accordingly, the positive electrode 20 and the negative electrode 30 are separated from each other with the partition 50 interposed therebetween, and are opposed to each other with the partition 50 interposed therebetween.

The partition 50 does not allow an anion to pass therethrough and allows a substance such as the lithium ion (a cation) other than the anion, which is to be inserted into and extracted from each of the positive electrode 20 and the negative electrode 30, to pass therethrough, between the positive electrode compartment S1 and the negative electrode compartment S2. One reason for this is to prevent mixing of the positive electrode electrolytic solution 61 and the negative electrode electrolytic solution 62 with each other, while allowing for movement of the lithium ion between the positive electrode compartment S1 and the negative electrode compartment S2. That is, the partition 50 allows the lithium ion to pass therethrough from the positive electrode compartment S1 to the negative electrode compartment S2, and allows the lithium ion to pass therethrough from the negative electrode compartment S2 to the positive electrode compartment S1.

Specifically, the partition 50 includes a positive ion exchange membrane, a solid electrolyte membrane, or both. The positive ion exchange membrane is a porous film that allows the lithium ion to pass therethrough. The solid electrolyte membrane has lithium-ion conductivity. One reason for this is that this improves a property of the partition 50 allowing the lithium ion to pass therethrough.

Note that the solid electrolyte membrane may be what is called an inorganic particle film. The inorganic particle film is a composite film that includes inorganic particles having the lithium-ion conductivity, a binder, and a fibrous substance. The inorganic particles include any one or more of inorganic materials including, without limitation, an oxide, a sulfide, a hydroxide, a carbonic acid salt, and a sulfuric acid salt. The binder includes any one or more of polymer compounds including, without limitation, polyvinyl formal, polyvinyl alcohol, polyvinyl acetal, polyvinyl butyral, polymethyl methacrylate, and polytetrafluoroethylene. The fibrous substance includes any one or more of fibrous materials including, without limitation, cellulose fibers, a polysaccharide, polyvinyl alcohol, polyacrylic acid, an anionic derivative of polystyrene, and a cationic derivative of polystyrene.

In particular, the partition 50 preferably includes the positive ion exchange membrane rather than the solid electrolyte membrane. One reason for this is that this makes it easier for each of the aqueous solvent included in the positive electrode electrolytic solution 61 and the aqueous solvent included in the negative electrode electrolytic solution 62 to permeate into the partition 50, which improves the lithium-ion conductivity of the partition 50.

The positive electrode 20 is disposed in the positive electrode compartment S1, and allows the lithium ion to be inserted thereinto and extracted therefrom. The negative electrode 30 is disposed in the negative electrode compartment S2, and allows the lithium ion to be inserted thereinto and extracted therefrom.

The positive electrode electrolytic solution 61 and the negative electrode electrolytic solution 62 are each the aqueous electrolytic solution. The positive electrode electrolytic solution 61 is contained in the positive electrode compartment S1, and the negative electrode electrolytic solution 62 is contained in the negative electrode compartment S2. The positive electrode electrolytic solution 61 and the negative electrode electrolytic solution 62 are therefore so separated from each other with the partition 50 interposed therebetween as not to be mixed with each other.

Thus, the positive electrode electrolytic solution 61 contained in the positive electrode compartment S1 is in contact with only the positive electrode 20 and not in contact with the negative electrode 30. In contrast, the negative electrode electrolytic solution 62 contained in the negative electrode compartment S2 is in contact with only the negative electrode 30 and not in contact with the positive electrode 20.

A pH of the positive electrode electrolytic solution 61 and a pH of the negative electrode electrolytic solution 62 are different from each other. Specifically, the pH of the negative electrode electrolytic solution 62 is higher than the pH of the positive electrode electrolytic solution 61. As long as such a high-and-low relationship related to the pH is satisfied, a composition (e.g., a kind of the aqueous solvent and a kind and a concentration of the ionic material) of each of the positive electrode electrolytic solution 61 and the negative electrode electrolytic solution 62 may be set as desired.

One reason why the pH of the negative electrode electrolytic solution 62 is higher than the pH of the positive electrode electrolytic solution 61 is that a decomposition potential of the aqueous solvent shifts owing to the pH difference between the two electrolytic solutions. This widens a potential window of the aqueous solvent while thermodynamically suppressing a decomposition reaction of the aqueous solvent upon charging and discharging. Accordingly, it becomes easier for the charging and discharging reactions to proceed sufficiently and stably through insertion and extraction of the lithium ion while a high voltage is obtained.

In particular, it is preferable that a composition formula (i.e., a kind of the electrolyte salt) of the positive electrode electrolytic solution 61 and a composition formula (i.e., a kind of the electrolyte salt) of the negative electrode electrolytic solution 62 be different from each other. One reason for this is that this makes it easier to achieve the above-described high-and-low relationship related to the pH.

As long as the above-described high-and-low relationship related to the pH is satisfied, the pH of each of the positive electrode electrolytic solution 61 and the negative electrode electrolytic solution 62 is not particularly limited.

In particular, the negative electrode electrolytic solution 62 that is in contact with the negative electrode 30 preferably has the pH that is higher than or equal to 11. The pH of the negative electrode electrolytic solution 62 is more preferably higher than or equal to 12, and still more preferably higher than or equal to 13. One reason for this is that this allows the negative electrode electrolytic solution 62 to have a sufficiently high pH, therefore making it even easier to achieve the high-and-low relationship related to the pH. Another reason is that this provides a sufficiently large difference between the pH of the positive electrode electrolytic solution 61 and the pH of the negative electrode electrolytic solution 62, therefore making it easier to maintain the high-and-low relationship between the pHs of the two electrolytic solutions.

Accordingly, the electrolyte salt included in the negative electrode electrolytic solution 62 is preferably a material such as lithium hydroxide in particular. One reason for this is that this makes it easier to make the pH of the negative electrode electrolytic solution 62 higher than or equal to 11, and to easily and stably achieve the negative electrode electrolytic solution 62 that is strongly alkaline.

The positive electrode electrolytic solution 61 that is in contact with the positive electrode 20 preferably has the pH that is lower than 11. Specifically, the pH of the positive electrode electrolytic solution 61 is preferably within a range from 3 to 8 both inclusive, more preferably within a range from 4 to 8 both inclusive, and still more preferably within a range from 4 to 6 both inclusive. One reason for this is that this allows the positive electrode electrolytic solution 61 to have a sufficiently low pH, therefore making it even easier to achieve the high-and-low relationship related to the pH, and making it easier to maintain the high-and-low relationship between the pHs of the two electrolytic solutions. Another reason is that this suppresses corrosion of members including, without limitation, the outer package body 10, the positive electrode current collector 20A, and the negative electrode current collector 30A, therefore improving electrochemical durability of the secondary battery.

Note that the positive electrode electrolytic solution 61, the negative electrode electrolytic solution 62, or each of the positive electrode electrolytic solution 61 and the negative electrode electrolytic solution 62 is preferably a saturated solution of the electrolyte salt (the lithium salt), as with the electrolytic solution 40 according to the first embodiment. One reason for this is that this makes it easier for the charging and discharging reactions to proceed stably upon charging and discharging. A method of checking whether the positive electrode electrolytic solution 61 and the negative electrode electrolytic solution 62 are each the saturated solution of the lithium salt is similar to the method of checking whether the electrolytic solution 40 is the saturated solution of the lithium salt.

Further, the positive electrode electrolytic solution 61 and the negative electrode electrolytic solution 62 may each be a pH buffer solution. The pH buffer solution may be an aqueous solution in which a weak acid and a conjugate base thereof are mixed together, or an aqueous solution in which a weak base and a conjugate acid thereof are mixed together. One reason for this is that this sufficiently suppresses variation in pH, and therefore makes it easier to maintain each of the pH of the positive electrode electrolytic solution and the pH of the negative electrode electrolytic solution 62.

In particular, the positive electrode electrolytic solution 61 preferably includes, as one or more anions, any one or more of ions including, without limitation, a sulfuric acid ion, a hydrogen sulfuric acid ion, a carbonic acid ion, a hydrogen carbonic acid ion, a phosphoric acid ion, a monohydrogen phosphoric acid ion, a dihydrogen phosphoric acid ion, and a carboxylic acid ion. One reason for this is that this sufficiently suppresses variation in pH of the positive electrode electrolytic solution 61, therefore making it easier to sufficiently maintain the pH of the positive electrode electrolytic solution 61. Specific examples of the carboxylic acid ion include a formic acid ion, an acetic acid ion, a propionic acid ion, a tartaric acid ion, and a citric acid ion.

Note that the pH of the positive electrode electrolytic solution 61 and the negative electrode electrolytic solution 62 may each include any one or more of materials including, without limitation, tris(hydroxymethyl)aminomethane and ethylenediaminetetraacetic acid as one or more buffers.

More specifically, it is preferable that the positive electrode electrolytic solution 61 include any one or more of a sulfuric acid ion, a hydrogen sulfuric acid ion, a carbonic acid ion, a hydrogen carbonic acid ion, a phosphoric acid ion, a monohydrogen phosphoric acid ion, or a dihydrogen phosphoric acid ion as one or more anions, and the negative electrode electrolytic solution 62 include a hydroxide ion as an anion. One reason for this is that this makes it easier to control the pH of the positive electrode electrolytic solution 61 to be sufficiently high and to control the pH of the negative electrode electrolytic solution 62 to be sufficiently low.

Here, the positive electrode electrolytic solution 61 and the negative electrode electrolytic solution 62 each preferably include the non-fluorine-containing anion rather than the fluorine-containing anion. One reason for this is that this suppresses the corrosion of the components of the secondary battery.

Here, the positive electrode electrolytic solution 61 and the negative electrode electrolytic solution 62 are preferably isotonic solutions that are isotonic with each other. One reason for this is that this makes osmotic pressure of each of the positive electrode electrolytic solution 61 and the negative electrode electrolytic solution 62 appropriate, and therefore makes it easier to maintain the high-and-low relationship between the pHs of the two electrolytic solutions.

[3-2. Operation]

The secondary battery operates as described below.

Upon charging, when the lithium ion is extracted from the positive electrode 20, the extracted lithium ion moves through the positive electrode electrolytic solution 61, the partition 50, and the negative electrode electrolytic solution 62, to the negative electrode 30. Thus, the lithium ion is inserted into the negative electrode 30. Upon discharging, when the lithium ion is extracted from the negative electrode 30, the extracted lithium ion moves through the negative electrode electrolytic solution 62, the partition 50, and the positive electrode electrolytic solution 61, to the positive electrode 20. Thus, the lithium ion is inserted into the positive electrode 20.

[3-3. Manufacturing Method]

A procedure for manufacturing the secondary battery is similar to the above-described procedure for manufacturing the secondary battery according to the first embodiment except for those described below.

To prepare each of the positive electrode electrolytic solution 61 and the negative electrode electrolytic solution 62, the ionic material is added to the aqueous solvent. In this case, conditions including, without limitation, the kind and the concentration (mol/kg) of the ionic material are adjusted to thereby set the pH of the negative electrode electrolytic solution 62 to be higher than the pH of the positive electrode electrolytic solution 61.

To assemble the secondary battery, first, the outer package body 10 provided with the partition 50 in advance is prepared. The outer package body 10 has the positive electrode compartment S1 and the negative electrode compartment S2. Thereafter, the positive electrode 20 is placed in the positive electrode compartment S1, and the coupling terminal part 20AT is led to the outside of the positive electrode compartment S1. In addition, the negative electrode 30 is placed in the negative electrode compartment S2, and the coupling terminal part 30AT is led to the outside of the negative electrode compartment S2. Lastly, the positive electrode electrolytic solution 61 is supplied into the positive electrode compartment S1 through an unillustrated positive electrode injection hole that is provided in the outer package body 10, and the negative electrode electrolytic solution 62 is supplied into the negative electrode compartment S2 through an unillustrated negative electrode injection hole that is provided in the outer package body 10. Thereafter, the positive electrode injection hole and the negative electrode injection hole are each sealed.

Thus, the positive electrode electrolytic solution 61 is contained in the positive electrode compartment S1 in which the positive electrode 20 is disposed, and the negative electrode electrolytic solution 62 is contained in the negative electrode compartment S2 in which the negative electrode 30 is disposed. As a result, the secondary battery of the two-component type including two aqueous electrolytic solutions (i.e., the positive electrode electrolytic solution 61 and the negative electrode electrolytic solution 62) is completed.

[3-4. Action and Effects]

According to the secondary battery of the second embodiment, the positive electrode 20 has the configuration similar to the configuration of the positive electrode 100. This makes it possible to achieve a superior battery characteristic and a superior recyclability characteristic as with the secondary battery of the first embodiment.

Other action and effects of the secondary battery according to the second embodiment are similar to those of the secondary battery according to the first embodiment.

[4. Method of Recycling Positive Electrode for Secondary Battery]

Next, a description is given of a method of recycling the positive electrode 100 described above.

Here, a description will be given of a case of using a secondary battery including the positive electrode 100 in order to recycle the positive electrode 100. The secondary battery may be the secondary battery according to the first embodiment or the secondary battery according to the second embodiment.

The secondary battery to be used to recycle the positive electrode 100 may be a normal secondary battery that has lifetime left and is therefore still operable, or may be a secondary battery that has no lifetime left and is therefore no longer operable (what is called a waste secondary battery).

Described below is a case where the secondary battery is the secondary battery according to the first embodiment and the polymer compound includes only the burning-out polymer compound. In this case, the positive electrode 20 corresponding to the positive electrode 100 is recycled.

[Recycling Procedure]

In recycling the positive electrode 20 corresponding to the positive electrode 100, first, the secondary battery including the positive electrode 20 is prepared. The secondary battery includes the positive electrode 20, the negative electrode 30, and the electrolytic solution 40, as described above.

Thereafter, the secondary battery is disassembled to thereby take out the positive electrode 20, following which the positive electrode 20 is washed with a washing solvent to thereby wash off the electrolytic solution 40 attached to the positive electrode 20. The washing solvent is not particularly limited in kind, and specific examples thereof include an aqueous solvent such as pure water.

Lastly, the positive electrode 20 is fired until the temperature of the positive electrode 20 falls within a range from 200°C to 500°C both inclusive. In this case, a heating apparatus such as an oven is used. A firing time is not particularly limited, and is specifically within a range from 10 minutes to 12 hours both inclusive.

A firing temperature may be set as desired within the range from 200°C to 500°C both inclusive, as long as the temperature allows the polymer compound (the burning-out polymer compound) to sufficiently burn out. In other words, the firing temperature may be set as desired depending on, for example, a kind of the burning-out polymer compound. In particular, the firing temperature is preferably within a range from 300°C to 450°C both inclusive. One reason for this is that this makes it easier for the burning-out polymer compound to burn out, and makes it easier to suppress the change in quality of the positive electrode active material and the positive electrode current collector.

In this firing process, the burning-out polymer compound burns out by the polymer compound being fired. Thus, the burning-out polymer compound is removed, which allows the positive electrode active material layer 20B to be decomposed. Accordingly, the positive electrode current collector 20A and the positive electrode active material are recovered.

In this case, the particles of the positive electrode active material that have been bound to each other via the polymer compound are separated from each other, and the particles of the positive electrode conductor that have been bound to each other via the polymer compound are also separated from each other. In addition, the particle of the positive electrode active material and the particle of the positive electrode conductor that have been bound to each other via the polymer compound are also separated from each other.

As a result, a mixture of the positive electrode current collector 20A and powder is obtained as a residue after the firing process. The powder includes the positive electrode active material in powder form and the positive electrode conductor in powder form.

Although not particularly limited, the firing process is preferably performed in an environment of an oxygen-containing atmosphere in particular. One reason for this is that this makes it easier for the burning-out polymer compound to burn out to be thereby removed. Specific examples of the oxygen-containing atmosphere include atmospheric air.

Thereafter, the mixture may be separated using any one or more of apparatuses including, without limitation, a dry classifier and a vibration sieving machine. A condition such as an air volume is not particularly limited and may thus be set as desired. In this case, the powder including, without limitation, the positive electrode active material and the positive electrode conductor and the positive electrode current collector 20A are separated from each other by using a difference between a size of the powder including, without limitation, the positive electrode active material and the positive electrode conductor and a size of the positive electrode current collector 20A. In this manner, the positive electrode current collector 20A is recovered.

Lastly, the powder from which the positive electrode current collector 20A has been separated is subjected to a separation process by a separation method such as a centrifugal separation method to thereby separate the positive electrode active material in powder form and the positive electrode conductor in powder form from each other. Thus, the positive electrode active material is separated from the positive electrode conductor, which allows the positive electrode active material to be recovered.

As a result, the positive electrode current collector 20A and the positive electrode active material are recovered from the positive electrode 20, which makes the positive electrode current collector 20A and the positive electrode active material usable again.

In this case, only the firing process at a relatively low temperature within the range from 200°C to 500°C both inclusive and a separation process of the mixture are used, which allows the positive electrode current collector 20A and the positive electrode active material to be easily and stably recovered from the positive electrode 20, without deteriorating each of the positive electrode current collector 20A and the positive electrode active material.

Moreover, when the positive electrode current collector 20A and the positive electrode active material are each expensive, the positive electrode current collector 20A and the positive electrode active material of high quality each become reusable after being recovered, which is advantageous in terms of cost as well.

Note that, instead of reusing the positive electrode current collector 20A and the positive electrode active material after separation from each other, the positive electrode current collector 20A and the positive electrode active material mixed with each other may be reused without being separated from each other.

[Recovery Rate]

When a weight of the positive electrode active material used as a raw material for fabricating the positive electrode 20 is known, calculating a recovery rate E represented by Expression (3) makes it possible to evaluate an efficiency in recovering the positive electrode active material by the recycling procedure described above.

$$E = (G2/G1) \times 100 \quad ...... (3)$$

where:

E is the recovery rate;
G1 is the weight of the positive electrode active material as the raw material; and
G2 is a weight of the positive electrode active material recovered.

As is apparent from Expression (3), the recovery rate E is an index indicating how much of the positive electrode active material used as the raw material has been recovered. Therefore, a value of the recovery rate E being as close to 100% as possible, without exceeding 100%, indicates that the positive electrode active material is efficiently recoverable from the positive electrode 20.

Note that, when the polymer compound includes the non-burning-out polymer compound together with the burning-out polymer compound, the burning-out polymer compound is removed but the non-burning-out polymer compound is not removed in the firing process. In this case, because the non-burning-out polymer compound remains without being removed after the firing process, a part of the positive electrode active material remains on the surface of the positive electrode current collector 20A without being separated from the positive electrode current collector 20A. Thus, a recovery amount of the positive electrode active material decreases, which makes the value of the recovery rate E less than 100%.

In addition, when the positive electrode current collector 20A does not have sufficient heat resistance, a part of the positive electrode current collector 20A can fall off, peel off, or dissolve in the firing process, which can cause the part of the positive electrode current collector 20A to be mixed into the powder after the firing process. In this case, the part of the positive electrode current collector 20A is also recovered together with the positive electrode active material, unless the part of the positive electrode current collector 20A is separated from the positive electrode active material. Thus, an apparent recovery amount of the positive electrode active material excessively increases, which makes the value of the recovery rate E exceed 100%.

[Purity]

Regarding the positive electrode active material recovered by the recycling procedure described above, it is possible to evaluate a purity of the positive electrode active material. The purity of the positive electrode active material is a purity of the lithium-transition-metal compound used as the positive electrode active material for fabricating the positive electrode 20.

To evaluate the purity of the positive electrode active material, the positive electrode active material is analyzed by any one or more of analysis methods including, without limitation, inductively coupled plasma (ICP) optical emission spectroscopy.

In this case, first, the positive electrode active material is put into an acid such as nitric acid, following which the acid is heated. The positive electrode active material is thereby dissolved, and a solution for analysis is thus obtained. Thereafter, the solution is diluted on an as-needed basis. A solvent for dilution is not particularly limited in kind. Lastly, the solution is analyzed by the analysis method described above.

In analyzing the positive electrode active material, a purity P (%) represented by Expression (4) is calculated based on a concentration of the transition metal element included as a constituent element in the positive electrode active material.

$$P = (C2/C1) \times 100 \quad ...... (4)$$

where:

P is the purity;
C1 is a concentration (ppm) of all metal ions (excluding the lithium ion) included in the positive electrode active material; and

C2 is a concentration (ppm) of a transition metal ion included in the positive electrode active material.

Note that, as described above, when the positive electrode current collector 20A does not have sufficient heat resistance, the recovery rate E increases by a part of the positive electrode current collector 20A being mixed into the powder after the firing process, and the recovery rate E can thus be a value close to 100%.

However, because not only the positive electrode active material but also the part of the positive electrode current collector 20A is included in the powder, a ratio of the positive electrode active material in the powder decreases as compared with a case where the part of the positive electrode current collector 20A is not included in the powder.

As a result, when the positive electrode current collector 20A does not have sufficient heat resistance, the purity P decreases even if the recovery rate E is a value close to 100%.

[Action and Effects]

According to the method of recycling the positive electrode 20 corresponding to the positive electrode 100, the positive electrode 20 is fired until the temperature of the positive electrode 20 falls within the range from 200°C to 500°C both inclusive, to thereby allow the polymer compound to burn out and recover the positive electrode current collector 20A and the positive electrode active material.

Thus, as described above, the positive electrode current collector 20A and the positive electrode active material are easily and stably recovered from the positive electrode 20 by only using simple processes including, without limitation, the firing process and the separation process. Accordingly, it is possible for the secondary battery including the positive electrode 20 to achieve a superior battery characteristic and a superior recyclability characteristic.

In particular, the positive electrode 20 may be fired in the oxygen-containing atmosphere, which makes it easier for the polymer compound to burn out in the firing process of the positive electrode 20. This makes it easier to recover the positive electrode active material from the positive electrode 20, and improves the recovery rate E and the purity P. Accordingly, it is possible to achieve higher effects.

Further, the positive electrode current collector 20A and the positive electrode active material may be separated from each other, which makes the positive electrode current collector 20A and the positive electrode active material usable separately from each other. Accordingly, it is possible to achieve higher effects.

[5. Modification Examples]

The configuration of the secondary battery is appropriately modifiable as described below. Any of the following series of modification examples may be combined with each other.

[Modification Example 1]

In the first embodiment, the positive electrode 20 and the negative electrode 30 are separated from each other with the electrolytic solution 40 interposed therebetween, as illustrated in FIG. 2. However, as illustrated in FIG. 4 corresponding to FIG. 2, the secondary battery may further include a separator 70, and the positive electrode 20 and the negative electrode 30 may thus be separated from each other with the separator 70 interposed therebetween. A configuration of a secondary battery illustrated in FIG. 4 is similar to the configuration of the secondary battery illustrated in FIG. 2 except for those described below.

The separator 70 is disposed between the positive electrode 20 and the negative electrode 30, and is adjacent to each of the positive electrode 20 and the negative electrode 30. The separator 70 is an insulating porous film that allows the lithium ion to pass therethrough and separates the positive electrode 20 and the negative electrode 30 from each other. The separator 70 is impregnated with the electrolytic solution 40. A material included in the separator 70 is not particularly limited as long as the material is a porous insulating material.

Specifically, the separator 70 is a polymer compound film. The polymer compound film includes any one or more of polymer compounds including, without limitation, polyolefin. Specific examples of the polymer compound include polyethylene and polypropylene.

Alternatively, the separator 70 is a solid electrolyte membrane. The solid electrolyte membrane is what is called an inorganic particle film. The inorganic particle film includes inorganic particles, a binder, and fibers of a fibrous substance.

The inorganic particles each include any one or more of inorganic materials. The inorganic material is a compound including, as one or more constituent elements, any one or more of positive ions of metal elements including, without limitation, Mg, Al, Si, Ca, Sc, Ti, V, Cr, Mn, Fe, Co, Ni, Cu, Zn, Ga, Ge, Sr, Y, Zr, Nb, Mo, Ru, Rh, Pd, Ag, In, Ba, Hf, Ta, W, Re, Ir, Pt, and Au. Note that the inorganic material includes any one or more of materials including, without limitation, an oxide, a sulfide, a hydroxide, a carbonic acid salt, and a sulfuric acid salt.

In particular, the inorganic material is preferably an inorganic solid electrolyte having superior alkali-metal-ion conductivity and high water resistance. One reason for this is that this prevents hydrolysis from occurring easily inside the secondary battery. Specifically, the inorganic solid electrolyte having superior alkali-metal-ion conductivity has a NASICON structure. More specifically, the inorganic solid electrolyte having superior alkali-metal-ion conductivity is, for example, a lithium phosphate solid electrolyte represented by a general formula of $LiM_2(PO_4)_3$. Note that M is any one or more of metal elements including, without limitation, Ti, Ge, Sr, Zr, Sn, and Al. In particular, M preferably includes Al and any one or more of metal elements including Ge, Zr, and Ti.

Specific examples of the lithium phosphate solid electrolyte having the NASICON structure include LATP $(Li_{1+x}Al_xTi_{2-x}(PO_4)_3)$, $Li_{1+x}Al_xGe_{2-x}(PO_4)_3$, and $Li_{1+x}Al_xZr_{2-x}(PO_4)_3$. Note that x satisfies $0 < x \leq 5$, preferably $0.1 \leq x \leq 0.5$. In particular, the lithium phosphate solid electrolyte is preferably LATP. One reason for this is that superior water resistance is obtained, which prevents hydrolysis from occurring easily inside the secondary battery.

Alternatively, the inorganic material is preferably an oxide-based solid electrolyte. Specific examples of the oxide-based solid electrolyte include amorphous LIPON ($Li_{2.9}PO_{3.3}N_{0.46}$) and LLZ ($Li_7La_3Zr_2O_{12}$) having a garnet structure.

Alternatively, the inorganic material is a material such as an oxide-based ceramic, a carbonic acid salt, a sulfuric acid salt, or a nitride-based ceramic. Specific examples of the oxide-based ceramic include alumina, silica, zirconia, yttria, magnesium oxide, calcium oxide, barium oxide, strontium oxide, and vanadium oxide. Specific examples of the carbonic acid salt include sodium carbonate, potassium carbonate, magnesium carbonate, calcium carbonate, barium carbonate, lanthanum carbonate, and cerium carbonate. Specific examples of the sulfuric acid salt include calcium sulfate, magnesium sulfate, aluminum sulfate, gypsum, and barium sulfate. Specific examples of the phosphoric acid salt include hydroxyapatite, zirconium phosphate, and titanium phosphate. Specific examples of the nitride-based ceramic include silicon nitride, titanium nitride, and boron nitride. In particular, materials including, without limitation, alumina, silica, and calcium oxide are preferably in a state of glass ceramic.

Note that, for example, shapes of the inorganic particles, an average particle size of the inorganic particles, and a content of the inorganic particles in the inorganic particle film are not particularly limited, and may thus be set as desired. However, because the inorganic particles are a major component of the inorganic particle film, the content of the inorganic particles in the inorganic particle film is preferably sufficiently large. One reason for this is that this densifies the separator 70 and improves hydrophobicity of the separator 70.

The binder includes any one or more of polymer compounds. The polymer compound is a compound in which monomers each including a hydrocarbon having a predetermined functional group are polymerized. The functional group includes any one or more of elements including, without limitation, O, S, N, and F as one or more constituent elements. Specific examples of the polymer compound include polyvinyl formal, polyvinyl alcohol, polyvinyl acetal, polyvinyl butyral, polymethyl methacrylate, and polytetrafluoroethylene.

Note that, for example, a molecular weight of the binder and a content of the binder in the inorganic particle film are not particularly limited, and may thus be set as desired.

The fibers of the fibrous substance each include any one or more of fibrous materials. The fibrous material preferably includes any one or more of hydrophilic functional groups. Specific examples of the hydrophilic functional group include a hydroxyl group, a sulfone group, and a carboxyl group. Specific examples of the fibrous material include cellulose fibers, a polysaccharide, polyvinyl alcohol, polyacrylic acid, an anionic derivative of polystyrene, and a cationic derivative of polystyrene. Examples of the anionic derivative of polystyrene include polystyrene sulfonate. Examples of the cationic derivative of polystyrene include polystyrene trialkylbenzylammonium. In particular, the fibrous material is preferably cellulose fibers. Note that a specific example of the fibrous material may be a derivative of any of the series of specific examples described above, or a copolymer including two or more of the series of specific examples.

Because the fibrous substance includes the hydrophilic functional group as described above, the electrolytic solution 40 is easily taken in between two or more fibers of the fibrous substance. Thus, the separator 70 swells easily when the separator 70 is impregnated with the electrolytic solution 40.

Note that, for example, an average fiber diameter of the fibrous substance and a content of the fibrous substance in the inorganic particle film are not particularly limited, and may thus be set as desired.

Here, the separator 70 may be a stacked body including the polymer compound film and the inorganic particle film that are stacked on each other. The respective numbers of the polymer compound film and the inorganic particle film to be stacked are not particularly limited, and may thus be set as desired.

To manufacture the inorganic particle film, first, the inorganic particle film, the binder, and the fibrous substance are put into a solvent such as an organic solvent to thereby prepare a slurry. Thereafter, the slurry is poured into a mold. Lastly, the slurry is dried to thereby volatilize the solvent, following which the mold is removed. Thus, the inorganic particle film including the inorganic particles, the binder, and the fibrous substance is completed.

In this case also, the lithium ion is movable between the positive electrode 20 and the negative electrode 30 via the separator 70, and similar effects are therefore achievable.

[Modification Example 2]

In the second embodiment, the partition 50 may be the solid electrolyte membrane or the inorganic particle film described in Modification example 1. Details of the inorganic particle film are as described above.

In this case also, the lithium ion is movable between the positive electrode 20 and the negative electrode 30 via the partition 50, and similar effects are therefore achievable.

[Modification Example 3]

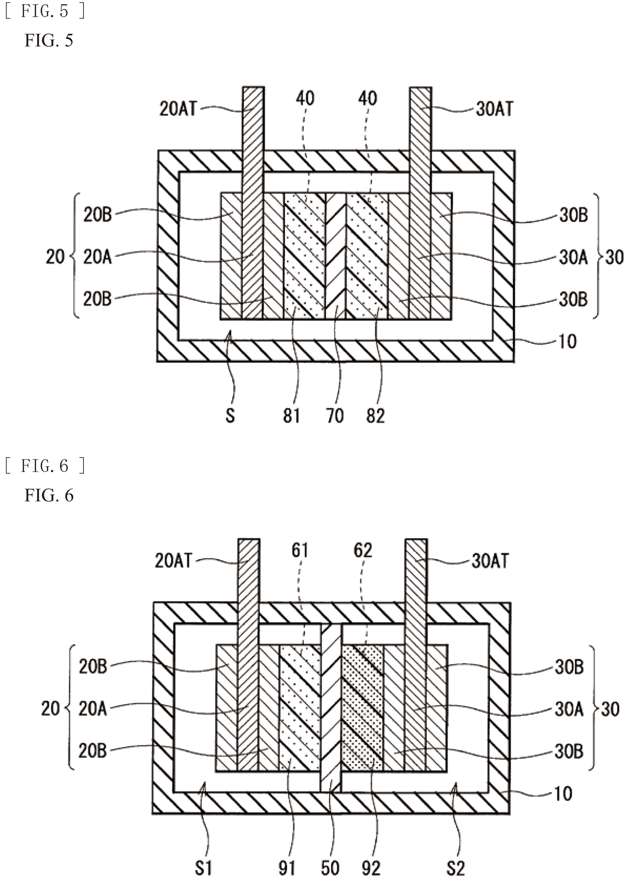

In the first embodiment, the electrolytic solution 40, which is a liquid electrolyte, is used as illustrated in FIG. 2. However, as illustrated in FIG. 5 corresponding to FIG. 2, electrolyte layers 81 and 82 may be used instead of the electrolytic solution 40. The electrolyte layers 81 and 82 are gel electrolytes. A configuration of a secondary battery illustrated in FIG. 5 is similar to the configuration of the secondary battery illustrated in FIG. 2 except for those described below.

Here, the secondary battery further includes the separator 70 and the electrolyte layers 81 and 82. The separator 70 is disposed between the positive electrode 20 and the negative electrode 30, as described above. The electrolyte layer 81 is disposed between the positive electrode 20 and the separator 70, and the electrolyte layer 82 is disposed between the negative electrode 30 and the separator 70. Thus, the electrolyte layer 81 is adjacent to each of the positive electrode 20 and the separator 70, and the electrolyte layer 82 is adjacent to each of the negative electrode 30 and the separator 70.

The electrolyte layers 81 and 82 each include the electrolytic solution 40 and a polymer compound, and the electrolytic solution 40 is held by the polymer compound. The polymer compound is not particularly limited in kind, and specifically includes any one or more of materials including, without limitation, polyvinylidene difluoride and polyethylene oxide. In FIG. 5, the electrolyte layers 81 and 82 are each lightly shaded.

Details of the separator 70 are as described above, except that the separator 70 is an insulating porous film that allows the lithium ion to pass therethrough and separates the electrolyte layers 81 and 82 from each other. Specifically, the separator 70 includes any one or more of polymer compounds including, without limitation, polyolefin. Specific examples of the polyolefin include polyethylene and polypropylene. Alternatively, the separator 70 may be the solid electrolyte membrane or the inorganic particle film described in Modification example 1. Details of the inorganic particle film are as described above.

To form the electrolyte layer 81, the electrolytic solution 40, the polymer compound, and a solvent for dilution are mixed with each other to thereby prepare a precursor solution in sol form, following which the precursor solution is applied on the surface of the positive electrode 20. A procedure for forming the electrolyte layer 82 is similar to the procedure for forming the electrolyte layer 81 except that the precursor solution is applied on a surface of the negative electrode 30.

In this case also, the lithium ion is movable between the positive electrode 20 and the negative electrode 30 via the electrolyte layers 81 and 82, and similar effects are therefore achievable. In this case, it is possible to prevent leakage of the electrolytic solution 40 in particular.

[Modification Example 4]

In the second embodiment, the positive electrode electrolytic solution 61 and the negative electrode electrolytic solution 62, which are liquid electrolytes, are used as illustrated in FIG. 3. However, as illustrated in FIG. 6 corresponding to FIG. 3, electrolyte layers 91 and 92 may be used instead of the positive electrode electrolytic solution 61 and the negative electrode electrolytic solution 62. The electrolyte layers 91 and 92 are gel electrolytes. A configuration of a secondary battery illustrated in FIG. 6 is similar to the configuration of the secondary battery illustrated in FIG. 3 except for those described below.

Here, the secondary battery further includes the electrolyte layers 91 and 92. The electrolyte layer 91 is disposed between the positive electrode 20 and the partition 50, and the electrolyte layer 92 is disposed between the negative electrode 30 and the partition 50. Thus, the electrolyte layer 91 is adjacent to each of the positive electrode 20 and the partition 50, and the electrolyte layer 92 is adjacent to each of the negative electrode 30 and the partition 50.

The electrolyte layer 91 includes the positive electrode electrolytic solution 61 and a polymer compound, and the positive electrode electrolytic solution 61 is held by the polymer compound. The electrolyte layer 92 includes the negative electrode electrolytic solution 62 and a polymer compound, and the negative electrode electrolytic solution 62 is held by the polymer compound. Details of the kinds of the polymer compound are as described above. In FIG. 6, the electrolyte layer 91 including the positive electrode electrolytic solution 61 is lightly shaded, and the electrolyte layer 92 including the negative electrode electrolytic solution 62 is darkly shaded.

To form the electrolyte layer 91, the positive electrode electrolytic solution 61, the polymer compound, and a solvent for dilution are mixed with each other to thereby prepare a precursor solution in sol form, following which the precursor solution is applied on the surface of the positive electrode 20. To form the electrolyte layer 92, the negative electrode electrolytic solution 62, the polymer compound, and a solvent for dilution are mixed with each other to thereby prepare a precursor solution in sol form, following which the precursor solution is applied on the surface of the negative electrode 30.

Details of the configuration of the partition 50 are as described above. However, the partition 50 may be the solid electrolyte membrane or the inorganic particle film described in Modification example 1. Details of the inorganic particle film are as described above.

In this case also, the lithium ion is movable between the positive electrode 20 and the negative electrode 30 via the electrolyte layers 91 and 92, and similar effects are therefore achievable. In this case, it is possible to prevent leakage of the positive electrode electrolytic solution 61 and the negative electrode electrolytic solution 62 in particular.

[Modification Example 5]

In each of the first embodiment and the second embodiment, described is a case where the secondary battery includes the aqueous electrolytic solution including the aqueous solvent. However, a non-aqueous electrolytic solution including a non-aqueous solvent (an organic solvent) may be used instead of the aqueous electrolytic solution.

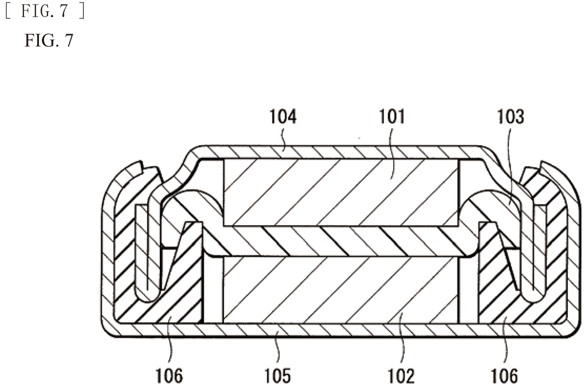

FIG. 7 illustrates a sectional configuration of a secondary battery including a non-aqueous electrolytic solution, and the secondary battery is a secondary battery of what is called a coin type. Specifically, as illustrated in FIG. 7, the secondary battery includes a positive electrode 101, a negative electrode 102, a separator 103, a positive electrode can 104, a negative electrode can 105, a gasket 106, and the electrolytic solution (not illustrated).

The positive electrode 101 is contained in the positive electrode can 104, and the negative electrode 102 is contained in the negative electrode can 105. The positive electrode 101 and the negative electrode 102 are stacked on each other with the separator 103 interposed therebetween. The positive electrode 101, the negative electrode 102, and the separator 103 are each impregnated with the electrolytic solution. The positive electrode can 104 and the negative electrode can 105 are crimped to each other with the gasket 106 interposed therebetween. The positive electrode 101, the negative electrode 102, and the separator 103 are each thus sealed in the positive electrode can 104 and the negative electrode can 105.

The positive electrode 101 has a configuration similar to that of the positive electrode 20 except that the positive electrode active material layer 20B is provided on one of the two opposed surfaces of the positive electrode current collector 20A. The negative electrode 102 has a configuration similar to that of the negative electrode 30 except that the negative electrode active material layer 30B is provided on one of the two opposed surfaces of the negative electrode current collector 30A. The positive electrode current collector and the negative electrode current collector are each preferably stable with respect to the non-aqueous electrolytic solution. The separator 103 is a porous film including any one or more of polymer compounds including, without limitation, polyethylene.

The non-aqueous electrolytic solution includes a non-aqueous solvent and an electrolyte salt. Only one kind of non-aqueous solvent may be used, or two or more kinds of non-aqueous solvents may be used. Only one kind of electrolyte salt may be used, or two or more kinds of electrolyte salts may be used.

The non-aqueous solvent is, for example, a carbonic-acid-ester-based compound, a carboxylic-acid-ester-based compound, or a lactone-based compound. Specific examples of the carbonic-acid-ester-based compound include ethylene carbonate, propylene carbonate, dimethyl carbonate, diethyl carbonate, and ethyl methyl carbonate. Specific examples of the carboxylic-acid-ester-based compound include ethyl acetate, ethyl propionate, propyl propionate, and ethyl trimethylacetate. Specific examples of the lactone-based compound include $\gamma$-butyrolactone and $\gamma$-valerolactone.

The electrolyte salt is, for example, a lithium salt. Specific examples of the lithium salt include lithium hexafluorophosphate ($LiPF_6$), lithium tetrafluoroborate ($LiBF_4$), lithium perchlorate ($LiClO_4$), lithium trifluoromethanesulfonate ($LiCF_3SO_3$), lithium bis(fluorosulfonyl)imide ($LiN(FSO_2)_2$), lithium bis(trifluoromethanesulfonyl)imide ($LiN(CF_3SO_2)_2$), lithium tris(trifluoromethanesulfonyl)methide ($LiC(CF_3SO_2)_3$), lithium bis(oxalato)borate ($LiB(C_2O_4)_2$), lithium monofluorophosphate ($Li_2PFO_3$), and lithium difluorophosphate ($LiPF_2O_2$).

Note that the electrolyte salt preferably includes the non-fluorine-containing anion, as described above. The electrolyte salt therefore preferably includes a lithium salt such as lithium perchlorate rather than a lithium salt such as lithium hexafluorophosphate.

When the positive electrode 101 is recovered from the secondary battery in order to recycle the positive electrode 101, the positive electrode 101 is washed using a non-aqueous solvent such as dimethyl carbonate as a washing solvent.

In this case also, the lithium ion is movable between the positive electrode 101 and the negative electrode 102 via the separator 103, and similar effects are therefore achievable.

[6. Applications of Secondary Battery]

Applications (application examples) of the secondary battery are not particularly limited. The secondary battery used as a power source may serve as a main power source or an auxiliary power source of, for example, electronic equipment and an electric vehicle. The main power source is preferably used regardless of the presence of any other power source. The auxiliary power source is used in place of the main power source, or is switched from the main power source.

Specific examples of the applications of the secondary battery include electronic equipment, apparatuses for data storage, electric power tools, battery packs, medical electronic equipment, electric vehicles, and electric power storage systems. Examples of the electronic equipment include video cameras, digital still cameras, mobile phones, laptop personal computers, headphone stereos, portable radios, and portable information terminals. Examples of the apparatuses for data storage include backup power sources and memory cards. Examples of the electric power tools include electric drills and electric saws. The battery pack is to be mounted on, for example, electronic equipment. Examples of the medical electronic equipment include pacemakers and hearing aids. Examples of the electric vehicles include electric automobiles including hybrid automobiles. Examples of the electric power storage systems include battery systems for home use or industrial use in which electric power is accumulated for a situation such as emergency. In each of the above-described applications, one secondary battery may be used, or multiple secondary batteries may be used.

The battery packs may each include a single battery, or may each include an assembled battery. The electric vehicle is a vehicle that operates (travels) using the secondary battery as a driving power source, and may be a hybrid automobile that is additionally provided with a driving source other than the secondary battery. In an electric power storage system for home use, electric power accumulated in the secondary battery serving as an electric power storage source may be utilized for using, for example, home appliances.

Needless to say, the secondary battery may have applications other than the series of applications described here as examples.

Examples

A description is given of Examples of the technology.

[Experiment Examples 1 to 14 and Comparative Examples 1 and 2]

Secondary batteries were manufactured, following which the secondary batteries were each evaluated as described below.

[Fabrication of Test Secondary Battery]

A three-electrode cell as a test secondary battery was fabricated here for simple evaluation of the secondary battery. To fabricate the test secondary battery, a test electrode corresponding to the positive electrode was fabricated.

[Fabrication of Test Electrode]

First, 93 parts by mass of the positive electrode active material (lithium manganate ($LiMn_2O_4$, having an average particle size of about 20 $\mu$m) as the lithium-transition-metal compound), 5 parts by mass of the polymer compound (the burning-out polymer compound) serving as the positive electrode binder, and 2 parts by mass of the positive electrode conductor (the carbon material or the metal material) were mixed with each other to thereby obtain a positive electrode mixture.

Used as the burning-out polymer compound were ethyl polyacrylate (PEA, having an average molecular weight of 10,000 and a Tg of 45°C) as the polyacrylic acid ester, polymethyl methacrylate (PMMA, having an average molecular weight of 800,000) as the polymethacrylic acid ester, polyvinyl butyral (PVB, having an average molecular weight of 52,000 and a Tg of 71°C) as the polyvinyl ether, polyvinyl acetate (PVAC, having an average degree of polymerization of 1500) as the polyvinyl ester, polyvinyl alcohol (PVA, having an average degree of polymerization of 1500), and carboxymethyl cellulose (CMC, having an average molecular weight of 350,000) as the cellulose ester.

Artificial graphite (Gr) in powder form was used as the carbon material, and titanium (Ti) in powder form was used as the metal material.

To obtain the positive electrode mixture, another polymer compound (the non-burning-out polymer compound) serving as the positive electrode binder was also used together on an asneeded basis. Polyvinylidene difluoride (PVDF) was used as the non-burning-out polymer compound.

A kind, a composition, and a content (wt%) of the polymer compound (the burning-out polymer compound and the non-burning-out polymer compound) were as listed in Tables 1 to 3. In the column of "Polymer compound (positive electrode binder)" in Tables 1 to 3, the column of "Burning-out" indicates the kind of the burning-out polymer compound, and the column of "Non-burning-out" indicates the kind of the non-burning-out polymer compound.

Thereafter, the positive electrode mixture was put into a solvent (N-methyl-2-pyrrolidone as an organic solvent), following which the solvent was stirred to thereby prepare a positive electrode mixture slurry in paste form.

Thereafter, the positive electrode mixture slurry was applied on the two opposite surfaces of the positive electrode current collector (having a thickness of 20 μm) using a coating apparatus, following which the applied positive electrode mixture slurry was dried to thereby form the positive electrode active material layers.

Used as the material of the positive electrode current collector were metal titanium (metal Ti) as a simple substance of titanium, SUS304 (a Cr alloy) as stainless steel (an alloy of chromium), metal copper (metal Cu) as a simple substance of copper, and metal aluminum (metal Al) as a simple substance of aluminum.

Lastly, the positive electrode active material layers were compression-molded using a roll pressing machine. As a result, the test electrode was fabricated (Examples 1 to 13).

After the completion of the test electrode, the test electrode was checked in terms of each of the thermogravimetric loss rate (%) of the polymer compound and the weight ratio WR (%), which revealed the results presented in Table 1.

Other test electrodes were also fabricated for comparison, as listed in Table 3. Specifically, a test electrode was fabricated by a similar procedure except that only the non-burning-out polymer compound (polyvinylidene difluoride) was used as the polymer compound serving as the positive electrode binder (Comparative example 1). In addition, a test electrode was fabricated by a similar procedure except that the weight ratio WR was changed by reducing a mixture ratio of the burning-out polymer compound and increasing a mixture ratio of the non-burning-out polymer compound (Comparative example 2).

For confirmation, although not specified in Tables 1 to 3, the weight ratio WRZ when the weight ratio WR was 100% was 0%, the weight ratio WRZ when the weight ratio WR was 98% was 2%, and the weight ratio WRZ when the weight ratio WR was 50% was 50%.

[Preparation of Electrolytic Solution]

Here, one kind of aqueous electrolytic solution and two kinds of non-aqueous electrolytic solutions were prepared as the electrolytic solution.

Specifically, the ionic material (lithium sulfate) was put into the aqueous solvent (pure water), following which the aqueous solvent was stirred to thereby prepare the electrolytic solution that was the aqueous electrolytic solution (Examples 1 to 9 and 12 to 14 and Comparative examples 1 and 2). In this case, the concentration of the ionic material was set to 2 mol/l (= 2 mol/dm$^3$).

In addition, the ionic material (lithium perchlorate) was put into the non-aqueous solvent (ethylene carbonate as the cyclic carbonic acid ester and dimethyl carbonate as the chain carbonic acid ester), following which the non-aqueous solvent was stirred to thereby prepare the electrolytic solution that was the non-aqueous electrolytic solution (Example 10). Lithium perchlorate included a perchloric acid ion (ClO4$^-$) as the non-fluorine-containing anion. In this case, a mixture ratio between the cyclic carbonic acid ester and the chain carbonic acid ester in the non-aqueous solvent was set to 30:70, and the concentration of the ionic material was set to 1 mol/l (= 1 mol/dm$^3$).

Further, the electrolytic solution that was the non-aqueous electrolytic solution was prepared by a similar procedure, except that lithium hexafluorophosphate was used instead of lithium perchlorate as the ionic material (Example 11). Lithium hexafluorophosphate included a hexafluorophosphoric acid ion (PF$_6^-$) as the fluorine-containing anion.

[Assembly of Test Secondary Battery]

The electrolytic solution was placed in a beaker, following which the test electrode, a counter electrode (metal nickel), and a reference electrode (silver-silver chloride) were each partly impregnated with the electrolytic solution to thereby assemble the three-electrode cell as the test secondary battery.

[Evaluation of Secondary Battery]

Evaluation of the test secondary batteries for their battery characteristics (capacity characteristics) and recyclability characteristics revealed the results presented in Tables 1 to 3.

[Capacity Characteristic]

To evaluate the capacity characteristic, the test secondary battery was charged and discharged in an ambient temperature environment (at a temperature of 23°C) to thereby measure a discharge capacity (mAh). Thereafter, the discharge capacity was divided by the weight (g) of the positive electrode active material to thereby calculate a test capacity (mAh/g) used as an index for evaluating the capacity characteristic.

Upon charging, the test secondary battery was charged with a current of 1 C until a potential of the test electrode reached 1.2 V with respect to the reference electrode. Upon discharging, the test secondary battery was discharged with a current of 1 C until the potential of the test electrode reached 0.6 V with respect to the reference electrode. Note that 1 C was a value of a current that caused a battery capacity (a theoretical capacity) to be completely discharged in 1 hour.

[Recyclability Characteristic]

To evaluate the recyclability characteristic, after the capacity characteristic was evaluated using the test secondary battery, a procedure similar to the procedure for recycling the positive electrode 20 described above was used to thereby calculate the recovery rate E (%) and the purity P (%) used as indices for evaluating the recyclability characteristic.

The procedure for calculating the recovery rate E was as described above. In this case, an aqueous solvent (pure water) was used as the washing solvent. In addition, the test electrode was fired in the atmospheric air, and firing conditions were set as follows: a firing temperature of 400°C and a firing time of 1 hour (Examples 1 to 13 and Comparative examples 1 and 2).

Note that a similar procedure was used except that the firing temperature as the firing condition was changed to 800°C (Example 14).

The procedure for calculating the purity P was as described above. In this case, nitric acid was used as the acid, and ICP optical emission spectroscopy was used as the analysis method. In addition, in calculating the purity P, attention was focused on the transition metal ion that was a manganese ion included as a constituent element in the positive electrode active material (the lithium-transition-metal compound).

As described above, in Tables 1 to 3, the positive electrode active material (the lithium-transition-metal compound) in each of Examples 1 to 14 and Comparative examples 1 and 2 was lithium manganate ($LiMn_2O_4$). The electrolytic solution in each of Examples 1 to 9 and 12 to 14 and Comparative examples 1 and 2 was the aqueous electrolytic solution. The electrolytic solution in Example 10 was the non-aqueous electrolytic solution including a perchloric acid ion ($ClO4^-$). The electrolyte solution in Example 11 was the non-aqueous electrolyte solution including a hexafluorophosphoric acid ion ($PF_6^-$). The positive electrode current collectors in Examples 1 to 14 and Comparative examples 1 and 2 were materials of the kinds listed in Tables 1 to 3. The positive electrode conductors in Examples 1 to 14 and Comparative examples 1 and 2 were materials of the kinds listed in Tables 1 to 3 and had the contents listed in Tables 1 to 3. The polymer compounds in Examples 1 to 14 and Comparative examples 1 and 2, separately indicated as the burning-out polymer compound and the non-burning-out polymer compound, were materials of the kinds listed in Tables 1 to 3 and had the contents listed in Tables 1 to 3. The firing conditions in Examples 1 to 13 and Comparative examples 1 and 2 used in calculating the recovery rate were a firing temperature of 400°C and a firing time of 1 hour. The firing conditions in Example 14 used in calculating the recovery rate were a firing temperature of 800°C and a firing time of 1 hour.

Note that Tables 1 to 3 indicate, as the thermogravimetric loss rate (%) when the temperature of the polymer compound reached 400°C, the total thermogravimetric loss rate (%) of the burning-out polymer compound and the non-burning-out polymer compound. The respective thermogravimetric loss rates (%) of the burning-out polymer compound and the non-burning-out polymer compound were as follows. The thermogravimetric loss rate (%) of polyethyl acrylate (PEA) was 100%. The thermogravimetric loss rate (%) of polymethyl methacrylate (PMMA) was 100%. The thermogravimetric loss rate (%) of polyvinyl butyral (PVB) was 95%. The thermogravimetric loss rate (%) of polyvinyl alcohol (PVA) was 100%. The thermogravimetric loss rate (%) of polyvinyl acetate (PVAC) was 75%. The thermogravimeric loss rate (%) of carboxymethyl cellulose (CMC) was 98%. The thermogravimeric loss rate (%) of polyvinylidene difluoride (PVDF) was 1%.

[Table 1]

(Table 1)

| Example | Positive electrode current collector | Polymer compound (positive electrode binder) | | | | Positive electrode conductor | | Thermogravimetric loss rate (%) | Weight ratio WR (%) | Test capacity (mAh/g) | Recovery rate E (%) | Purity P (%) |
|---------|-----|-----|-----|-----|-----|-----|-----|-----|-----|-----|-----|-----|
| | Kind | Burning -out | Content (wt%) | Non-burning -out | Content (wt%) | Kind | Content (wt%) | | | | | |
| 1 | Metal Ti | PEA | 5 | - | - | Gr | 2 | 100 | 100 | 95 | 100 | 100 |
| 2 | Metal Ti | PVB | 5 | - | - | Gr | 2 | 95 | 100 | 94 | 100 | 100 |
| 3 | Metal Ti | PVA | 5 | - | - | Gr | 2 | 100 | 100 | 92 | 100 | 100 |
| 4 | Metal Ti | PEA + CMC | 2.5 + 2.5 | - | - | Gr | 2 | 99 | 100 | 95 | 95 | 100 |
| 5 | Metal Ti | PEA | 4.9 | PVDF | 0.1 | Gr | 2 | 98 | 98 | 95 | 95 | 94 |
| 6 | Cr alloy | PEA | 5 | - | - | Gr | 2 | 100 | 100 | 92 | 100 | 99 |
| 7 | Metal Cu | PEA | 5 | - | - | Gr | 2 | 100 | 100 | 92 | 105 | 96 |
| 8 | Metal Al | PEA | 5 | - | - | Gr | 2 | 100 | 100 | 95 | 120 | 80 |
| 9 | Metal Ti | PEA | 5 | - | - | Ti | 5 | 100 | 100 | 80 | 104 | 75 |
| 10 | Metal Ti | PEA | 5 | - | - | Gr | 2 | 100 | 100 | 95 | 100 | 100 |
| 11 | Metal Ti | PEA | 5 | - | - | Gr | 2 | 100 | 100 | 95 | 100 | 97 |

[Table 2]

[Table 2]

(Table 2)

| Example | Positive electrode current collector | Polymer compound (positive electrode binder) | | | | | Positive electrode conductor | | Thermogravimetric loss rate (%) | Weight ratio WR (%) | Test capacity (mAh/g) | Recovery rate E (%) | Purity P (%) |
|---|---|---|---|---|---|---|---|---|---|---|---|---|---|
| | | Kind | Burning-out | Content (wt%) | Non-burning-out | Content (wt%) | Kind | Content (wt%) | | | | | |
| 12 | Metal Ti | PMMA | 5 | - | - | | Gr | 2 | 100 | 100 | 90 | 100 | 100 |
| 13 | Metal Ti | PVAC | 5 | - | - | | Gr | 2 | 75 | 100 | 91 | 89 | 100 |
| 14 | Metal Ti | PEA | 5 | - | - | | Gr | 2 | 100 | 100 | 92 | 30 | 96 |

[Table 3]

[Table 3]

(Table 3)

| Comparative example | Positive electrode current collector | Polymer compound (positive electrode binder) | | | | Positive electrode conductor | | Thermogravimetric loss rate (%) | Weight ratio WR (%) | Test capacity (mAh/g) | Recovery rate E (%) | Purity P (%) |
|---|---|---|---|---|---|---|---|---|---|---|---|---|
| | Kind | Burning-out | Content (wt%) | Non-burning-out | Content (wt%) | Kind | Content (wt%) | | | | | |
| 1 | Metal Ti | - | - | PVDF | 5 | Gr | 2 | 0 | 0 | 85 | 0 | - |
| 2 | Metal Ti | PEA | 2.5 | PVDF | 2.5 | Gr | 2 | 50 | 50 | 91 | 0 | - |

[Discussion]

As indicated in Table 1 to 3, the test capacity, the recovery rate E, and the purity P varied depending on the configuration of the test electrode.

Specifically, when the thermogravimetric loss rate of the polymer compound was lower than 60% (Comparative examples 1 and 2),a high test capacity was obtained in some cases, but the recovery rate E was 0%. In this case, the purity P was not calculable.

In contrast, when the thermogravimetric loss rate of the polymer compound was 60% or higher (Examples 1 to 11), a high test capacity was obtained, and a high recovery rate E and a high purity P were also obtained.

In particular, when the thermogravimetric loss rate of the polymer compound was 60% or higher, a series of tendencies described below were also obtained.

Firstly, when the burning-out polymer compound was used as the polymer compound, a sufficient test capacity was obtained, and a sufficient recovery rate E and a sufficient purity P were also obtained, regardless of the kind of the burning-out polymer compound.

In this case, when the polymer compound included only the burning-out polymer compound and the thermogravimetric loss rate of the polymer compound was 95% or higher, a high test capacity was obtained, and a high recovery rate E and a high purity P were also obtained.

Secondly, when the burning-out polymer compound included any of a polyacrylic acid ester, polyvinyl butyral, polyvinyl alcohol, or a cellulose ether, a sufficient test capacity was obtained, and a sufficient recovery rate E and a sufficient purity P were also obtained.

The tendency described here was similarly obtained also when the burning-out polymer compound included any of a polymethacrylic acid ester, polyvinyl acetal, polyvinyl acetate, or a cellulose ester.

Thirdly, when the non-burning-out polymer compound was used together with the burning-out polymer compound as the polymer compound and the weight ratio WR was 86% or greater, a high test capacity was obtained, and a high recovery rate E and a high purity P were also obtained.

Fourthly, when the non-burning-out polymer compound was used together with the burning-out polymer compound as the polymer compound and the weight ratio WRZ was greater than or equal to 0% and less than 14%, a high test capacity was obtained, and a high recovery rate E and a high purity P were also obtained.

In these cases, when the non-burning-out polymer compound included polyvinylidene difluoride, a sufficient test capacity was obtained, and a sufficient recovery rate E and a sufficient purity P were also obtained.

The tendency described here was similarly obtained also when the non-burning-out polymer compound included any of polytetrafluoroethylene, polyether ether ketone, polyphenylene sulfide, or polyimide.

Fifthly, a high test capacity was obtained, and a high recovery rate E and a high purity P were also obtained, regardless of the material of the positive electrode current collector.

In this case, when the positive electrode current collector included any of titanium or chromium as a constituent element, the test capacity and the purity P each increased, and a high recovery rate E was obtained within a range not exceeding 100%.

The tendency described here was similarly obtained also when the positive electrode current collector included zirconium as a constituent element.

Sixthly, when the test electrode included the positive electrode conductor, the test capacity further increased, and the recovery rate E and the purity P each further increased as well.

In this case, when the carbon material rather than the metal material was used as the positive electrode conductor, the test capacity further increased and the purity P further increased, while the recovery rate E was achieved.

Seventhly, when the non-aqueous electrolytic solution was used and the non-fluorine-containing anion rather than the fluorine-containing anion was used as the anion, the purity P further increased.

Here, when the test electrode was fired until a temperature of the test electrode fell within the range from 200°C to 500°C both inclusive (Example 1), a high recovery rate E and a high purity P were obtained, while the test capacity was achieved.

In contrast, when the test electrode was fired until the temperature of the test electrode became higher than 500°C (Example 14), a high test capacity and a high purity P were obtained, but the recovery rate E decreased as a result of the change in quality of the positive electrode active material.

[Conclusion]

Based upon the results presented in Tables 1 to 3, when: the positive electrode active material layer included the positive electrode active material and the polymer compound; the positive electrode active material included the lithium-transition-metal compound; and the thermogravimetric loss rate of the polymer compound was 60% or higher, a high test capacity was obtained, and a high recovery rate E and a high purity P were also obtained. The test secondary battery therefore achieved a superior battery characteristic and a superior recyclability characteristic.

In addition, by firing the test electrode until the temperature of the test electrode fell within the range from 200°C to 500°C both inclusive, the positive electrode active material and the positive electrode current collector were recovered from the test electrode. In this case, a high test capacity was obtained, and a high recovery rate E and a high purity P were also obtained. The test secondary battery therefore achieved a superior battery characteristic and a superior recyclability characteristic.

Although the configuration of the secondary battery of the technology has been described above with reference to some embodiments and Examples, the configuration of the secondary battery of the technology is not limited to the configurations described with reference to the embodiments and Examples above, and is modifiable in a variety of ways.

The effects described herein are mere examples, and effects of the technology are therefore not limited to those described herein. Accordingly, the technology may achieve any other effect.

Note that the technology may have any of the following configurations.

<1>
A positive electrode for a secondary battery, the positive electrode including:

a positive electrode active material layer including a positive electrode active material and a polymer compound; and
a positive electrode current collector that supports the positive electrode active material layer, in which
the positive electrode active material includes a lithium-transition-metal compound, and
a thermogravimetric loss rate measurable when the polymer compound is fired until a temperature of the polymer compound becomes 400 degrees Celsius in atmospheric air is 60 percent or higher.

<2>
The positive electrode for the secondary battery according to <1>, in which

the polymer compound includes a burning-out polymer compound, and
a thermogravimetric loss rate measurable when the burning-out polymer compound is fired until a temperature of the burning-out polymer compound becomes 400 degrees Celsius in the atmospheric air is 70 percent or higher.

<3>
The positive electrode for the secondary battery according to <1>, in which
the thermogravimetric loss rate measurable when the polymer compound is fired until the temperature of the polymer compound becomes 400 degrees Celsius in the atmospheric air is 95 percent or higher.

<4>
The positive electrode for the secondary battery according to <2>, in which
the burning-out polymer compound includes a constitutional unit of at least one polymer compound selected from a polyacrylic acid ester, a polymethacrylic acid ester, polyvinyl alcohol, a polyvinyl ether, a polyvinyl ester, a cellulose ester, and a cellulose ether.

<5>
The positive electrode for the secondary battery according to <2>, in which
the burning-out polymer compound includes at least one of a polyacrylic acid ester, a polymethacrylic acid ester, polyvinyl alcohol, polyvinyl acetal, polyvinyl butyral, polyvinyl acetate, a cellulose ester, or a cellulose ether.

<6>
The positive electrode for the secondary battery according to <2>, in which
the burning-out polymer compound includes a copolymer including constitutional units of at least two polymer compounds selected from a polyacrylic acid ester, a polymethacrylic acid ester, polyvinyl alcohol, a polyvinyl ether, a polyvinyl ester, a cellulose ester, and a cellulose ether.

<7>
The positive electrode for the secondary battery according to any one of <2> to <6>, in which

the polymer compound further includes a non-burning-out polymer compound,
a thermogravimetric loss rate measurable when the non-burning-out polymer compound is fired until a temperature of the non-burning-out polymer compound becomes 400 degrees Celsius in the atmospheric air is lower than 70 percent, and
a weight ratio represented by Expression (1) is 98 percent or greater,

$$WR = [W1/(W1 + W2)] \times 100 \quad ...... (1)$$

where
WR is the weight ratio,
W1 is a weight of the burning-out polymer compound, and
W2 is a weight of the non-burning-out polymer compound.

<8>
The positive electrode for the secondary battery according to any one of <2> to <6>, in which

the polymer compound further includes a non-burning-out polymer compound,
a thermogravimetric loss rate measurable when the non-burning-out polymer compound is fired until a temperature of the non-burning-out polymer compound becomes 400 degrees Celsius in the atmospheric air is lower than 70 percent, and
a weight ratio represented by Expression (2) is greater than or equal to 0 percent and less than 14 percent,

$$WRZ = [W2/(W1 + W2)] \times 100 \quad ...... (2)$$

where
WRZ is the weight ratio,
W1 is a weight of the burning-out polymer compound, and
W2 is a weight of the non-burning-out polymer compound.

<9>
The positive electrode for the secondary battery according to <7> or <8>, in which
the non-burning-out polymer compound includes at least one of polyvinylidene difluoride, polytetrafluoroethylene, polyether ether ketone, polyphenylene sulfide, or polyimide.
<10>
The positive electrode for the secondary battery according to any one of <1> to <9>, in which
the positive electrode current collector includes at least one of titanium, zirconium, or chromium as a constituent element.
<11>
The positive electrode for the secondary battery according to any one of <1> to <10>, in which

the positive electrode active material layer further includes a positive electrode conductor, and
the positive electrode conductor includes a carbon material.

<12> A secondary battery including:

the positive electrode for the secondary battery according to any one of <1> to <11>;
a negative electrode; and
an electrolytic solution.

<13>
The secondary battery according to <12>, in which

the electrolytic solution includes an anion, and
the anion includes no fluorine as a constituent element.

<14>
The secondary battery according to <12> or <13>, in which
the secondary battery includes a lithium secondary battery.
<15>
A method of recycling a positive electrode for a secondary battery, the method including
firing the positive electrode for the secondary battery according to any one of <1 > to <11> until a temperature of the positive electrode for the secondary battery becomes higher than or equal to 200 degrees Celsius and lower than or equal to 500 degrees Celsius, to thereby allow the polymer compound to burn out and recover the positive electrode current collector and the positive electrode active material.

<16>

The method of recycling the positive electrode for the secondary battery according to <15>, in which the positive electrode for the secondary battery is fired in an oxygen-containing atmosphere.

<17>

The method of recycling the positive electrode for the secondary battery according to <15> or <16>, further including separating the positive electrode current collector and the positive electrode active material from each other.

Reference Signs List

20, 100 ...... positive electrode
20A, 100A ...... positive electrode current collector
20B, 100B ...... positive electrode active material layer
30 ...... negative electrode

**Claims**

1. A positive electrode for a secondary battery, the positive electrode comprising:

   a positive electrode active material layer including a positive electrode active material and a polymer compound; and
   a positive electrode current collector that supports the positive electrode active material layer, wherein
   the positive electrode active material includes a lithium-transition-metal compound, and
   a thermogravimetric loss rate measurable when the polymer compound is fired until a temperature of the polymer compound becomes 400 degrees Celsius in atmospheric air is 60 percent or higher.

2. The positive electrode for the secondary battery according to claim 1, wherein

   the polymer compound includes a burning-out polymer compound, and
   a thermogravimetric loss rate measurable when the burning-out polymer compound is fired until a temperature of the burning-out polymer compound becomes 400 degrees Celsius in the atmospheric air is 70 percent or higher.

3. The positive electrode for the secondary battery according to claim 1, wherein
   the thermogravimetric loss rate measurable when the polymer compound is fired until the temperature of the polymer compound becomes 400 degrees Celsius in the atmospheric air is 95 percent or higher.

4. The positive electrode for the secondary battery according to claim 2, wherein
   the burning-out polymer compound includes a constitutional unit of at least one polymer compound selected from a polyacrylic acid ester, a polymethacrylic acid ester, polyvinyl alcohol, a polyvinyl ether, a polyvinyl ester, a cellulose ester, and a cellulose ether.

5. The positive electrode for the secondary battery according to claim 2, wherein
   the burning-out polymer compound includes at least one of a polyacrylic acid ester, a polymethacrylic acid ester, polyvinyl alcohol, polyvinyl acetal, polyvinyl butyral, polyvinyl acetate, a cellulose ester, or a cellulose ether.

6. The positive electrode for the secondary battery according to claim 2, wherein
   the burning-out polymer compound comprises a copolymer including constitutional units of at least two polymer compounds selected from a polyacrylic acid ester, a polymethacrylic acid ester, polyvinyl alcohol, a polyvinyl ether, a polyvinyl ester, a cellulose ester, and a cellulose ether.

7. The positive electrode for the secondary battery according to any one of claims 2 to 6, wherein

   the polymer compound further includes a non-burning-out polymer compound,
   a thermogravimetric loss rate measurable when the non-burning-out polymer compound is fired until a temperature of the non-burning-out polymer compound becomes 400 degrees Celsius in the atmospheric air is lower than 70 percent, and
a weight ratio represented by Expression (1) is 86 percent or greater,

$$WR = [W1/(W1 + W2)] \times 100 \quad ...... (1)$$

where
WR is the weight ratio,
W1 is a weight of the burning-out polymer compound, and
W2 is a weight of the non-burning-out polymer compound.

8.  The positive electrode for the secondary battery according to any one of claims 2 to 6, wherein

    the polymer compound further includes a non-burning-out polymer compound,
    a thermogravimetric loss rate measurable when the non-burning-out polymer compound is fired until a temperature of the non-burning-out polymer compound becomes 400 degrees Celsius in the atmospheric air is lower than 70 percent, and
    a weight ratio represented by Expression (2) is greater than or equal to 0 percent and less than 14 percent,

$$WRZ = [W2/(W1 + W2)] \times 100 \quad ...... (2)$$

where
WRZ is the weight ratio,
W1 is a weight of the burning-out polymer compound, and
W2 is a weight of the non-burning-out polymer compound.

9.  The positive electrode for the secondary battery according to claim 7 or 8, wherein
    the non-burning-out polymer compound includes at least one of polyvinylidene difluoride, polytetrafluoroethylene, polyether ether ketone, polyphenylene sulfide, or polyimide.

10. The positive electrode for the secondary battery according to any one of claims 1 to 9, wherein
    the positive electrode current collector includes at least one of titanium, zirconium, or chromium as a constituent element.

11. The positive electrode for the secondary battery according to any one of claims 1 to 10, wherein

    the positive electrode active material layer further includes a positive electrode conductor, and
    the positive electrode conductor includes a carbon material.

12. A secondary battery comprising:

    the positive electrode for the secondary battery according to any one of claims 1 to 11;
    a negative electrode; and
    an electrolytic solution.

13. The secondary battery according to claim 12, wherein

    the electrolytic solution includes an anion, and
    the anion includes no fluorine as a constituent element.

14. The secondary battery according to claim 12 or 13, wherein
    the secondary battery comprises a lithium secondary battery.

15. A method of recycling a positive electrode for a secondary battery, the method comprising
    firing the positive electrode for the secondary battery according to any one of claims 1 to 11 until a temperature of the positive electrode for the secondary battery becomes higher than or equal to 200 degrees Celsius and lower than or equal to 500 degrees Celsius, to thereby allow the polymer compound to burn out and recover the positive electrode current collector and the positive electrode active material.

16. The method of recycling the positive electrode for the secondary battery according to claim 15, wherein the positive electrode for the secondary battery is fired in an oxygen-containing atmosphere.

17. The method of recycling the positive electrode for the secondary battery according to claim 15 or 16, further comprising
separating the positive electrode current collector and the positive electrode active material from each other.

[ FIG. 1 ]
FIG. 1

[ FIG. 2 ]
FIG. 2

[ FIG. 3 ]

FIG. 3

20AT · · · 30AT

20 { 20B · 20A · 20B }

30 { 30B · 30A · 30B }

10

S1 · 61 · 50 · 62 · S2

[ FIG. 4 ]

FIG. 4

20AT · · · 30AT

20 { 20B · 20A · 20B }

30 { 30B · 30A · 30B }

10

S · 70 · 40

[ FIG. 5 ]

FIG. 5

[ FIG. 6 ]

FIG. 6

[ FIG. 7 ]

FIG. 7

EP 4 730 416 A1

# INTERNATIONAL SEARCH REPORT

| International application No. |
| --- |
| **PCT/JP2024/028538** |

## A. CLASSIFICATION OF SUBJECT MATTER

*H01M 4/13*(2010.01)i; *H01M 4/62*(2006.01)i; *H01M 4/66*(2006.01)i; *H01M 10/54*(2006.01)i
FI:  H01M4/13; H01M4/62 Z; H01M4/66 A; H01M10/54

According to International Patent Classification (IPC) or to both national classification and IPC

## B. FIELDS SEARCHED

Minimum documentation searched (classification system followed by classification symbols)

H01M4/13; H01M4/62; H01M4/66; H01M10/54

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

## C. DOCUMENTS CONSIDERED TO BE RELEVANT

| Category* | Citation of document, with indication, where appropriate, of the relevant passages | Relevant to claim No. |
| --- | --- | --- |
| A | JP 2009-193778 A (NIPPON MINING & METALS CO., LTD.) 27 August 2009 (2009-08-27) entire text, all drawings | 1-17 |
| A | JP 2021-072157 A (MATSUDA SANGYO COMPANY LIMITED) 06 May 2021 (2021-05-06) entire text, all drawings | 1-17 |
| A | CN 109193055 A (SHENZHEN WEICHUANGYUAN TECHNOLOGY CO., LTD.) 11 January 2019 (2019-01-11) entire text, all drawings | 1-17 |
| A | CN 106159371 A (HEFEI GUOXUAN HIGH-TECH POWER ENERGY CO., LTD.) 23 November 2016 (2016-11-23) entire text | 1-17 |

☐ Further documents are listed in the continuation of Box C.  ☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **17 October 2024** | **29 October 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**
Information on patent family members

International application No.

**PCT/JP2024/028538**

| Patent document cited in search report | | | Publication date (day/month/year) | Patent family member(s) | | | Publication date (day/month/year) |
|---|---|---|---|---|---|---|---|
| JP | 2009-193778 | A | 27 August 2009 | KR 10-2009-0087801 | | A | |
| | | | | CN 101509071 | | A | |
| | | | | TW 200934879 | | A | |
| JP | 2021-072157 | A | 06 May 2021 | (Family: none) | | | |
| CN | 109193055 | A | 11 January 2019 | (Family: none) | | | |
| CN | 106159371 | A | 23 November 2016 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012195073 A
- JP 2020191184 A
- JP 2006331707 A
- JP 2018206675 A